(19) Europäisches Patentamt
European Patent Office
Office européen des brevets

(11) **EP 3 529 055 B1**

(12) **EUROPÄISCHE PATENTSCHRIFT**

(45) Veröffentlichungstag und Bekanntmachung des Hinweises auf die Patenterteilung:
**07.06.2023   Patentblatt 2023/23**

(21) Anmeldenummer: **17791033.8**

(22) Anmeldetag: **20.10.2017**

(51) Internationale Patentklassifikation (IPC):
**B29C 65/48** $^{(2006.01)}$   **B29C 65/50** $^{(2006.01)}$
**F16L 47/03** $^{(2006.01)}$   **B29C 65/36** $^{(2006.01)}$
**B29L 23/00** $^{(2006.01)}$   **B29K 101/12** $^{(2006.01)}$

(52) Gemeinsame Patentklassifikation (CPC):
(C-Sets verfügbar)
**B29C 66/5221; B29C 65/3612; B29C 65/364;
B29C 65/3648; B29C 65/3668; B29C 65/3676;
B29C 65/4815; B29C 65/5021; B29C 65/5057;
B29C 66/1122; B29C 66/3034; B29C 66/5229;
B29C 66/532; B29C 66/53241; B29C 66/73921;**

(Forts.)

(86) Internationale Anmeldenummer:
**PCT/EP2017/076888**

(87) Internationale Veröffentlichungsnummer:
**WO 2018/073430 (26.04.2018 Gazette 2018/17)**

(54) **INDUKTIVES VERSCHWEISSEN VON KUNSTSTOFFOBJEKTEN MIT ELEKTRISCH UNTERBROCHENEM AUFHEIZMITTEL**

INDUCTIVE WELDING OF PLASTIC OBJECTS WITH ELECTRICALLY INTERRUPTED HEATING MEANS

SOUDAGE PAR INDUCTION D'OBJETS EN MATIÈRE PLASTIQUE PAR UN MOYEN DE CHAUFFAGE À INTERRUPTION ÉLECTRIQUE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **20.10.2016   DE 102016120037**

(43) Veröffentlichungstag der Anmeldung:
**28.08.2019   Patentblatt 2019/35**

(73) Patentinhaber: **BRUGG Rohrsystem AG
5314 Kleindöttingen (CH)**

(72) Erfinder:
• **RAMETSTEINER, Karl
4040 Linz (AT)**
• **HUNZIKER, Urs
8706 Meilen (CH)**

(74) Vertreter: **Naiu, Radu Mircea et al
E. Blum & Co. AG
Vorderberg 11
CH-8044 Zürich (CH)**

(56) Entgegenhaltungen:
| | |
|---|---|
| EP-A1- 2 452 805 | AT-A4- 508 119 |
| DE-A1-102006 059 337 | FR-A1- 2 748 415 |
| JP-A- H10 688 | JP-A- H1 047 580 |
| JP-A- H09 188 859 | JP-A- H09 323 359 |
| JP-A- H11 304 080 | JP-A- S63 308 080 |
| US-A- 2 739 829 | US-A- 5 756 973 |

(52) Gemeinsame Patentklassifikation (CPC): (Forts.)
**F16L 47/03;** B29C 66/71; B29C 66/72321;
B29C 66/727; B29C 66/7311; B29L 2023/225

C-Sets
B29C 66/71, B29K 2023/065;
B29C 66/71, B29K 2075/00

**Beschreibung**

Technisches Gebiet

Die vorliegende Erfindung betrifft das technische Gebiet des thermischen Verbindens zweier Objekte aus Kunststoff mittels Induktionsschweißens. Die vorliegende Erfindung betrifft insbesondere ein Aufheizmittel aus einem elektrisch leitenden und induktiv erhitzbarem Material, eine verschweißte Anordnung sowie ein Schweißsystem mit einem solchen Aufheizmittel sowie ein Verfahren zum thermischen Verbinden zweier jeweils ein Kunststoffmaterial aufweisenden Objekte.

Hintergrund der Erfindung

Objekte aus Kunststoff können thermisch miteinander verbunden werden, indem ein elektrisch leitfähiges Material zwischen die beiden zu verbindenden Objekte eingebracht wird und dieses durch ein elektromagnetisches Wechselfeld erhitzt wird, welches von einem speziell ausgebildeten Generator erzeugt wird. Bei dem sog. Induktionsschweißen von Kunststoffobjekten erfolgt eine elektromagnetische Kopplung zwischen einem magnetischen und elektrisch leitfähigen Material und einem Induktionsgenerator im Wesentlichen über ein zeitlich veränderndes Magnetfeld, welches von einer Spule des Induktionsgenerators erzeugt wird.

Das Prinzip des Induktionsschweißens wird insbesondere beim thermischen Verbinden der Enden von zwei Kunststoffrohren mittels einer Kunststoffmuffe verwendet, welche über die beiden zu verschweißenden Enden geschoben wird. Ein magnetisches und elektrisch leitfähiges Aufheizmittel wird dabei zwischen die Kunststoffmuffe und die Mantelfläche von jeweils einem Endabschnitt der beiden zu verbindenden Rohre eingebracht und induktiv erhitzt, so dass die Außenseiten der beiden Endabschnitte sowie die Innenseite der Kunststoffmuffe aufgeschmolzen werden und bei einem nachfolgenden Abkühlen eine dauerhafte Schweißverbindung eingehen.

Induktionsschweißverfahren für Kunststoffmantelrohre sind beispielsweise in EP 2 886 285 A1 sowie in DE 10 2013 021 667 A1 offenbart.

EP 2 452 805 A1 und AT 508 119 A4 offenbaren jeweils ein Verfahren zum thermischen Verbinden zweier Endabschnitte einer Fernwärmeleitung. Die Fernwärmeleitung weist auf ein Stahlrohr zur Führung eines Wärmeträgers und ein Mantelrohr aus einem thermoplastischen Kunststoff zur Umhüllung einer Wärmedämmung für das Stahlrohr. Das Verbinden der beiden Endabschnitte erfolgt über eine thermoplastische Verbindungsmuffe für die Mantelrohre, um deren Enden (nach einem Verschweißen der Stahlrohre) Streifen eines Streckmetallgitters als Einlage zwischen die Mantelrohre und die Verbindungsmuffe eingebracht werden und dabei um die (Enden der) Mantelrohre gewickelt werden. Zum thermischen Verbinden bzw. Verschweißen der Kunststoffrohrenden mit der thermoplastischen Verbindungsmuffe wird das eingebrachte Streckmetallgitter induktiv erhitzt.

US 2739 829 A offenbart ein Verfahren zum thermischen Verbinden bzw. Verschweißen zweier Enden von jeweils einem Kunststoffrohr mittels bzw. in einer Kunststoffmuffe. Zwischen der Kunststoffmuffe und einer der beiden Kunststoffrohre wird jeweils ein metallisches Band eingebracht, welches induktiv erhitzbar ist. Um vor dem induktiven Schweißvorgang eine relative Positionierung der räumlichen Anordnung bestehend aus den beiden Kunststoffrohren und der Kunststoffmuffe zu verhindern, wird beim Einschieben der Kunststoffrohre in die Kunststoffmuffe eine chemische Substanz verwendet, welche dafür sorgt, dass die Kunststoffmuffe geweitet ist. Nach einem gewünschten Verdunsten dieser chemischen Substanz schrumpft die Kunststoffmuffe, so dass die beiden Rohrenden in dieser fixiert sind und der induktive Schweißvorgang bei einer festen relativen Positionierung von den Kunststoffrohren und der Kunststoffmuffe durchgeführt werden kann. Das metallische Band kann eine Mehrzahl von Öffnungen bzw. ein Netz aus sich überkreuzenden Drähten aufweisen, welche zwischen benachbarten Drähten ebenfalls Öffnungen definieren. In diese Öffnungen dringt bei einem Schweißvorgang aufgeschmolzenes Kunststoffmaterial ein und verbessert so die Festigkeit der resultierenden Schweißverbindung.

JP H09 188859 A offenbart eine induktiv erhitzbare Wärme erzeugende Schicht, welche verwendet zum thermischen Verbinden eines Kunststoffrohrs und eines Fitting Bauteils mittels eines Heißklebeprozesses. Das Fitting Bauteil und das Kunststoffrohr können aus unterschiedlichen Materialien bestehen. Die Wärme erzeugende Schicht ist als ein länglicher Streifen ausgebildet. Der Streifen besteht aus einem klebrigen Material, in welches kleine Partikel eingebettet sind, die induktiv erhitzbar sind.

JP H10 688 A und JP H09 323359 A offenbaren jeweils einen Heißklebeprozess unter Beteiligung von zumindest einem Kunststoffrohr. Der Heißklebeprozess basiert auf einem induktiven Aufschmelzen einer als Heizer Aufheizstruktur. Die Aufheizstruktur kann ein klebriges Matrixmaterial umfassen, in welches eine Vielzahl von partikelartigen Heizelementen eingebettet sind. Die Aufheizstruktur kann auch in Form eines Schichtaufbaus realisiert sein, wobei sich eine Schicht mit eingebetteten Heizelementen zwischen zwei klebrigen Schichten ohne Heizelemente befindet.

FR 2 748 415 A1 offenbart eine Verbindung von zwei Enden jeweils eines Kunststoffrohres in einer Muffe. Innerhalb der Muffe bzw. an der Innenseite der Muffe befindet sich ein elastisches Aufheizelement, welches sich entlang des gesamten Umfangs der Muffe erstreckt. Das Aufheizelement ist induktiv erhitzbar, wobei die entsprechenden elektromagnetischen Wellen von einer erregten Spulenanordnung erzeugt werden.

US 5 756 973 A offenbart ein induktiv erhitzbares Aufheizmittel, welches für ein thermo-plastisches Verschweißen bzw. Heißverkleben von zwei Verbundstrukturen verwendet werden kann. Das Aufheizmittel kann ein Harz enthalten, welches dasselbe ist, aus welchem auch die beiden miteinander zu verbindenden Verbundstrukturen hergestellt sind. Das Verschweißen bzw. Heißverkleben erfolgt entlang einer länglichen leicht gekrümmten und nicht geschlossenen Schweißlinie, welche von einem induktiven Schweißkopf "abgefahren" wird. Das Aufheizmittel weist Drahtstrukturen auf, welche zum Zwecke einer verbesserten mechanischen Verbindung der Verbundstrukturen Widerhaken bzw. Zacken aufweisen.

JP H11 304080 A offenbart ein Verfahren zum Reparieren einer Beschädigung in einem Kunststoffrohr. Über die Beschädigung wird zunächst eine Abdichtstruktur und auf die Abdichtstruktur eine dünne Platte aus einem thermoplastischen Harz gelegt. Auf die dünne Platte wird dann ein Reparaturstück gelegt. Danach wird auf das Reparaturstück eine gekrümmte Platte gelegt, welche ebenfalls aus einem thermoplastischen Harz besteht. Das Reparaturstück weist eine induktiv erhitzbare Legierung auf.

JP S63 308080 A offenbart ein Verfahren zum thermischen Laminieren zweier Schichtmaterialien, die jeweils ein Harz aufweisen. Das Laminieren erfolgt in einem kontinuierlichen Prozess, bei dem die beiden Schichtmaterialien, welche einer Teppichrückseite bzw. einer Teppichvorderseite zugeordnet sind, von zwei Vorratsrollen abgewickelt werden, wobei auf einer Vorratsrolle das Schichtmaterial und auf der anderen Vorratsrolle das Schichtmaterial bevorratet ist. Zwischen den beiden Schichtmaterialien wird von einer Vorratsrolle ein schichtartiges Aufheizmaterial abgewickelt, zwischen die beiden Schichtmaterialien gebracht und zusammen mit den beiden Schichtmaterialien über eine Spannrolle in einen induktiven Wechselwirkungsbereich transferiert, in dem eine Spule elektromagnetische Wellen erzeugt. Diese erzeugen in dem sich kontinuierlich an der Spule vorbei transportierten Aufheizmaterial Wirbelströme, heizen dadurch das Aufheizmaterial auf und führen zu einem Verschmelzen der beiden Schichtmaterialien. Das schichtartige Aufheizmaterial ist oben und unten mit einer Klebeschicht versehen.

JP H10 47580 A offenbart ein Heißklebematerial, mit dem zwei Bauteile miteinander verklebt werden können. Das Heißklebematerial weist eine Schicht Schmelzkleber auf, in welche ein induktiv erhitzbares Material eingebettet ist. Als Heißklebematerial kann auch eine gestapelte Anordnung aus zwei geschichteten solchen Heißklebematerialien zum Verkleben der Bauteile verwendet werden.

DE 102006059337 A1 offenbart induktiv erhitzbare Verbindungselemente zum Verbinden von Teilen aus thermoplastischen Materialien. Die Verbindungselemente können Durchbrüche, Vorsprünge und/oder Vertiefungen aufweisen, um die mechanische Festigkeit einer induktiv realisierten Verschweißung der beiden thermoplastischen Materialien zu erhöhen.

Ein technisches Problem beim Induktionsschweißen besteht darin, die Wärmemenge bzw. die thermische Energie, welche über das Aufheizmittel zugeführt wird, so einzustellen, dass zum einen eine stabile thermische Schweißverbindung gewährleistet ist und zum anderen die Formstabilität der miteinander zu verschweißenden Objekte nicht gefährdet ist. Nur so können mittels Induktionsschweißens "gute" Schweißverbindungen erzielt werden.

Für eine "gute" Schweißverbindung ist es jedoch nicht nur erforderlich, die gesamte Menge an thermischer Energie, welche für eine flächige Schweißverbindung verwendet wird, genau zu bestimmen. Es sollte vielmehr auch dafür gesorgt werden, dass diese thermische Energie möglichst gleichmäßig über die gesamte Fläche der Schweißverbindung verteilt wird. Insbesondere sollten sog. lokale "Hotspots" vermieden werden, welche zu einer lokalen Überhitzung und Beschädigung insbesondere von verflüssigtem Kunststoff führen können.

Beispielsweise beim Verschweißen von isolierten Fernwärmeleitungen hat sich gezeigt, dass punktuelle Überhitzungen im Schweißprozess eines Mantelrohres einer isolierten Fernwärmeleitung darunter liegende Isoliermaterialien (z.B. PU-Schäume) derart verändern, dass sich die entsprechenden Isolierwerte verändern und/oder Diffusionssperren durchlässig werden. Ferner können Überhitzungen und insbesondere lokale Überhitzungen bei kristallinen Werkstoffen oder teilkristallinen Werkstoffen (z.B. bei High Density Polyethylen, HDPE, welches für Kunststoffrohre ein bevorzugter Werkstoff ist) zumindest bei einem nachfolgenden Abkühlprozess zu starken Unregelmäßigkeiten in der Ausbildung von Kristalliten führen. Dadurch werden typischerweise mechanische Störzonen gebildet werden, die in der Folge mechanische Sollbruchstellen darstellen. Außerdem können stärkere unerwünschte lokale Überhitzungen zu einem Abbruch bzw. Abriss von Polymerketten führen, was auch als sog. DePolymerisation bezeichnet wird. Auch De-Polymerisationen stellen mechanische Schwachstellen im Gefüge des betreffenden Kunststoffs dar. Außerdem kann eine noch stärkere lokale Erhitzung sogar zu einer Zersetzung und damit zu einer höchst unerwünschten Bildung von Gasblasen führen. Auch in diesem Zusammenhang ist es offensichtlich, dass dadurch die mechanische Festigkeit einer Schweißverbindung leidet.

Der Erfindung liegt die Aufgabe zugrunde das Induktionsschweißen von Kunststoffen in Hinblick auf mechanisch stabile Schweißverbindungen zu verbessern.

Zusammenfassung der Erfindung

Diese Aufgabe wird gelöst durch die Gegenstände der unabhängigen Patentansprüche. Vorteilhafte Ausführungsformen der vorliegenden Erfindung sind in den abhängigen Ansprüchen beschrieben.

Gemäß einem ersten Aspekt der Erfindung wird beschrieben ein Aufheizmittel zum thermischen Verbinden zweier jeweils ein Kunststoffmaterial aufweisenden Objekte, wobei beim Verbinden (i) ein erstes inneres Objekt zumindest teilweise von einem zweiten äußeren Objekt umgeben ist und (ii) das Aufheizmittel entlang eines vollumfänglichen Umfangsverlaufs um das erste innere Objekt herum das erste innere Objekt zumindest teilweise umgibt und sich zwischen dem ersten inneren Objekt und dem zweiten äußeren Objekt befindet. Das beschriebene Aufheizmittel weist eine bandartige Struktur mit einem Aufheizhilfsmaterial auf, welches induktiv erhitzbar ist, wobei das Aufheizhilfsmaterial entlang des Umfangsverlaufs räumlich derart verteilt oder angeordnet ist, dass entlang des vollumfänglichen Umfangsverlaufs um das erste innere Objekt herum eine elektrische Leitfähigkeit an zumindest einer Stelle unterbrochen ist .

Dem beschriebenen Aufheizmittel liegt die Erkenntnis zugrunde, dass durch eine gezielte Unterbrechung des Stromflusses entlang der Umfangsrichtung auf einfache Weise verhindert werden kann, dass sich um das erste innere Objekt herum eine Kurzschlusswicklung ergibt, welche bei einem Induktionsschweißvorgang zu einem induzierten Stromfluss um das gesamte erste innere Objekt herum führen würde. Bei einem geschlossenen bzw. ununterbrochen leitfähigen Aufheizmittel resultiert ein solcher induzierter Stromfluss aus dem Prinzip eines Transformators, wobei eine Spule des Induktionsgenerators die Primärspule des Transformators und das ununterbrochen leitfähige Aufheizmittel die Sekundärspule des Transformators darstellt.

In diesem Zusammenhang haben die Erfinder erkannt, dass ein gerichteter Strom, welcher nur bei einem ununterbrochen leitfähigen und das erste innere Objekt vollständig umgebenden Aufheizmittel auftritt, zu einer Asymmetrie des gesamten Stromflusses führt, welche wiederum zu einer ungleichmäßigen Erwärmung des Aufheizmittels führt. Eine Asymmetrie (der Richtung) des für die Erwärmung verantwortlichen Stromflusses in dem Aufheizmittel resultiert im Falle eines geschlossen leitfähigen Aufheizbandes aus der Tatsache, dass sich bei einer induktiven Erregung des Aufheizbandes grundsätzlich zwei Arten von Strömen ausbilden. Eine erste Art ist der Strom, welcher aufgrund der Eigenschaft das Ausheizmittels als eine Trafo-Sekundärwicklung um das gesamte erste innere Objekt herum fließt und welcher in diesem Dokument auch als Kurzschlussstrom bezeichnet wird. Der Kurzschlussstrom fließt ausschließlich oder zumindest stark bevorzugt in Umfangsrichtung. Die zweite Art von Strom sind sog. Wirbelströme, die sich beim Induktionsschweißen in bekannter Weise in dem Aufheizmittel als ein elektrischer Leiter aufgrund des sich zeitlich ändernden erregenden Magnetfeldes erzeugt werden, welches wiederum von der Spule des Induktionsgenerators generiert wird. Die Wirbelströme haben in aller Regel keine besonderen Vorzugsrichtungen und führen demzufolge zu einer besonders homogenen induktiven Wärmeentwicklung. Durch das Unterbinden von Kurzschlussströmen wird also genau derjenige Teil des für die Erwärmung verantwortlichen Stromes unterbunden, welcher asymmetrisch in Bezug auf die Stromrichtung ist. Dadurch wird insgesamt die Homogenität der Erwärmung verbessert und bei einem Schweißvorgang können lokale Überhitzungen in dem zu verflüssigenden Kunststoff auf einfache und effektive Weise vermieden werden.

Die durch den Umfangsverlauf an jedem Punkt des Aufheizmittels definierte Umfangsrichtung wird in diesem Dokument auch als Tangentialrichtung bezeichnet. Eine Richtung senkrecht zu der Umfangsrichtung bzw. zu der Vielzahl an Tangentialrichtungen wird in diesem Dokument als Längsrichtung oder als Axialrichtung bezeichnet.

Anschaulich ausgedrückt wird durch zumindest einen elektrischen Unterbruch des Aufheizmittels sichergestellt, dass das Aufheizmittel selbst keine vollständige Sekundärwicklung um das erste innere Objekt herum bildet. Dadurch werden Kurzschlussströme unterbunden und die Aufheizung bzw. Erwärmung des Aufheizmittels erfolgt ausschließlich basierend auf induktiv erzeugten Wirbelströmen. Dadurch können beim Schweißvorgang lokale Überhitzungen in einzelnen Hotspots vermieden werden. Außerdem wird die Montage des Aufheizmittels bzw. das Anlegen des Aufheizmittels um das erste innere Objekt herum vereinfacht und die gesamte Handhabung eines induktiven Schweißvorgangs vereinfacht.

Bevorzugt ist das Aufheizmittel derart ausgebildet, dass es auf beiden Seiten der bandartigen Struktur zu einer Erwärmung des angrenzenden Kunststoffmaterials führt. Dies bedeutet, dass bei einem thermischen Verbinden nicht lediglich ein Objekt an das andere Objekt angeschweißt wird, sondern dass beide Objekte zumindest annähernd symmetrisch miteinander verschweißt werden.

Es wird darauf hingewiesen, dass auch dann, wenn bei den meisten Ausführungsbeispielen von induktiven Schweißvorgängen konzentrisch zueinander angeordnete zylindrische Objekte verschweißt werden, das erfindungsgemäße Aufheizmittel auch für eckige oder ovale Objekte verwendet werden kann. Die Umfangslinie, entlang welcher sich das Aufheizmittel erstreckt, muss also keineswegs kreisförmig sein.

Gemäß einem Ausführungsbeispiel der Erfindung weist das Aufheizhilfsmaterial ein elektrisch leitfähiges Material auf. Dies hat den Vorteil, dass zum induktiven Erhitzen sog. Wirbelströme beitragen können.

In diesem Zusammenhang wird darauf hingewiesen, dass die in diesem Dokument beschriebene Aufheizung zum Teil durch magnetische Verluste und zum Teil durch elektrische Verluste bewirkt werden kann. Unter "magnetische Verluste" werden sog. Ummagnetisierungsverluste am Aufheizmittel verstanden, welche mit der ferromagnetischen und/oder ferrimagnetischen Magnetisierbarkeit des Aufheizmittels zusammenhängen und auch als Hystereseverluste bezeichnet werden können. Die "elektrischen Verluste" sind insbesondere ohmsche Verluste in Verbindung mit den genannten Wirbelströmen, die bei der induktiven Wechselwirkung des Aufheizmittels mit einem von einem entsprechenden Generator erzeugten elektromagnetischen Feld erzeugt werden.

Im Folgenden werden weitere Vorteil einer auf Wirbelströmen basierten induktiven Aufheizung des Aufheizmittels beschrieben:

- Wirbelströme können bevorzugt mit deutlich höheren Erregungsfrequenzen erzeugt werden als Kurzschlussströme. Dabei sind die Erregungsfrequenzen die Frequenzen der von einer Spule eines Induktionsgenerators generierten elektromagnetischen Wellen, welche für die induktive Erwärmung verantwortlich sind. Höhere Erregungsfrequenzen haben jedoch eine höhere Energieeffizienz für den Schweißprozess zur Folge. Außerdem können für höhere Erregungsfrequenzen eine Vielzahl von verschiedenen Geometrien und Größen von Erregungsspulen verwendet werden, so dass für verschiedene Anwendungsfälle jeweils geeignete Erregerspulen zum Einsatz kommen können.
- Bei einem zumindest elektrisch unterbrochenem Aufheizmittel muss auch die Erregungsspule des Induktionsgenerators nicht mehr vollständig um das erste innere Objekt herum geschlossen werden, weil kein Kurzschlussstrom induziert werden soll. Auch dies trägt dazu bei, dass ein Induktionsschweißen mit einer Vielzahl von unterschiedlichen Formen und/oder Größen von Erregungsspulen realisiert werden kann. Dabei können häufig verschmutzungs- und/oder verschleißanfällige Steckverbindungen vermieden oder deren Anzahl zumindest stark reduziert werden.
- Durch den beschriebenen bewussten Verzicht auf einen tangential fließenden Kurzschlussstrom kann die Erregungsspule in einer geeigneten Verpackung hermetisch einschlossen werden. Dadurch reduziert sich die Empfindlichkeit der Erregungsspule gegenüber in der Praxis häufig auftretenden Verschmutzungen und/oder mechanischen Belastungen.

Das elektrisch leitfähige Material kann ein Metall oder mehrere Metalle bzw. eine Metalllegierung oder mehrere Metalllegierungen aufweisen. Metalllegierungen können zumindest eine der folgenden Elementgruppen beinhalten: Messing(Cu-Zn), Bronze (Cu-Sn), Edelstahl (Fe-Cr-Ni) und Stahl (Fe-C).

Unter dem Begriff "elektrisch leitfähiges Material" kann in diesem Dokument sowohl ein "einheitliches" Material (z.B. reines Eisen) als auch ein Materialbestandteil oder mehrere Materialbestandteile einer Zusammensetzung von verschiedenen Materialien verstanden werden. Insbesondere kann sich der Begriff "elektrisch leitfähiges Material" zumindest auf einen einzelnen Stoff (z.B. zumindest ein Verbindungsbestandteil, z.B. leitfähiges Eisen, in einem als Ganzes nicht leitfähigen Metalloxid) oder auf eine Materialzusammensetzung (z.B. eine Legierung) beziehen.

Gemäß einem weiteren Ausführungsbeispiel der Erfindung weist das Aufheizhilfsmaterial ein magnetisches Material auf, insbesondere ein ferromagnetisches und/oder ein ferrimagnetisches Material.

Ferromagnetismus tritt bei bestimmten Metallen und Legierungen auf, während Ferrimagnetismus insbesondere bei oxidischen Materialien wie Magnetit und Ferriten beobachtet wird. Die Hysterese-Kurven von ferromagnetischen und ferrimagnetischen Materialien verlaufen prinzipiell gleich, jedoch ist bei ferrimagnetischen Stoffen die Sättigungsmagnetisierung typischerweise niedriger. Bei beiden tritt bei der Curie-Temperatur der Verlust der starken Magnetisierbarkeit auf. Bei beiden gibt es auch hart- und weichmagnetische Materialien.

Ferrimagnetische Materialien haben geringere Wirbelstromverluste, weil ihre Leitfähigkeit um Größenordnungen geringer ist, als die der metallischen ferromagnetischen Stoffe. Demzufolge ist bei ferrimagnetischen Materialien der Anteil an induktiver Erhitzung, welcher auf Wirbelströmen basiert, viel geringer.

Um einen hohen induktiven Wärmeeintrag zu gewährleisten, welcher auf Ummagnetisierungsverlusten basiert, sollte das magnetische Material eine relativ hohe Koerzitivfeldstärke haben. Diese ist nämlich ein direktes Maß für Ummagnetisierungsverluste, die in bekannter Weise durch die von einer magnetischen Hysteresekurve eingeschlossenen Fläche bestimmt sind.

Gemäß einem weiteren Ausführungsbeispiel der Erfindung ist das elektrisch leitfähige Material ein ferromagnetisches Material, welches eine Curie-Temperatur hat, die geringer ist als 460°C.

Dieser Ausführungsform der Erfindung liegt die Erkenntnis zugrunde, dass durch das Verwenden eines ferromagnetischen Materials mit einer in Bezug zu dem Material der beiden zu verbindenden Objekte geeigneten Curie-Temperatur eine automatische Temperaturbegrenzung bei einem thermischen Verbindungsvorgang gegeben ist. Dies bedeutet, dass bei einer Curie-Temperatur, welche auf der einen Seite ausreichend hoch ist, um das Kunststoffmaterial von zumindest einem der beiden Objekte aufzuschmelzen, und welche auf der anderen Seite nicht so hoch ist, so dass das Kunststoffmaterial auf eine Temperatur gebracht wird, welche zu einer thermischen Zerstörung von zumindest einem Teil von zumindest einem der beiden Objekte führt. Eine solche thermische Zerstörung kann beispielsweise dadurch gegeben sein, dass das betreffende Objekt soweit aufschmilzt, dass sich seine Form während des thermischen Verbindungsvorgangs nicht unerheblich verändert. Insbesondere sollte das ferromagnetische Material eine Curie-Temperatur haben, welche, sofern diese Curie-Temperatur bei einem thermischen Verbindungsvorgang auch erreicht wird, innerhalb einer typischen für einen thermischen Verbindungsvorgang benötigten Zeitdauer, lediglich zu einer Aufschmelzung einer Oberflächenschicht von zumindest einem der beiden Objekte führt.

Unter dem Begriff "ferromagnetisches oder ferrimagnetisches Material" kann in diesem Dokument sowohl ein "einheitliches" Material mit einer einheitlichen "Curie-Temperatur" als auch ein Materialbestandteil oder mehrere Materialbestandteile einer Zusammensetzung von verschiedenen Materialien verstanden werden. Insbesondere kann sich der Begriff "ferromagnetisches oder ferrimagnetisches Material" zumindest auf einen einzelnen Stoff (z.B. zumindest ein Legierungsbestandteil) oder auf eine Materialzusammensetzung (z.B. Legierung) beziehen.

Bei Erreichen der Curie-Temperatur des Aufheizmittels bzw. der Aufheizhilfsmaterials fallen die Ummagnetisierungsverluste weg und die Einkopplung von Energie in das Aufheizmittel ist entsprechend reduziert, weil nur noch die ggf. auftretenden elektrischen Verluste zu einer (weiteren) Erwärmung des Aufheizmittels beiztragen. Je nach konkreter Ausgestaltung des Aufheizmittels kann dieses Wegfallen des durch Ummagnetisierungsverluste bewirkten Energieeintrags bereits zu einer Temperaturbegrenzung ausreichen. Ggf. kann eine entsprechende Reduktion der Einkopplung von Energie auch von einem Induktionsgenerator erkannt werden, von welchem dann "weniger Leistung entnommen wird". In diesem Zusammenhang kann der Induktionsgenerator als die Primärseite eines ganzen Aufheizsystems angesehen werden, welches aus dem Induktionsgenerator und dem (sekundärseitigen) Aufheizmittel besteht. Wie vorstehend dargelegt, stellt das sekundärseitige Aufheizmittel jedoch keine Sekundärspule eines Transformators dar. Ein Erkennen einer reduzierten Leistungsentnahme kann als Signal verwendet werden, den Induktionsgenerator so anzusteuern, dass die induktive Energieübertragung weiter reduziert oder sogar abgeschaltet wird.

Bevorzugt hat das ferromagnetische oder ferrimagnetische Material eine Curie-Temperatur, die geringer ist als 400°C, insbesondere geringer als 300°C und weiter insbesondere geringer als 250°C. Dies hat den Vorteil, dass auch für Kunststoffobjekte, welche einen vergleichsweise niedrigen Schmelzpunkt haben, auch bei einem längeren induktiven Schweißvorgang und/oder bei einem Schweißvorgang mit hoher induktiver Primärenergie (von einem Generator erzeugt) eine hohe Formstabilität der beiden zu verschweißenden Objekte gewährleistet werden kann.

Eine Curie-Temperatur deutlich über dem Schmelzpunkt der beteiligten Kunststoffe trägt zu einer schnellen Aufheizung beim Schweißprozess bei und verhilft damit zu einer Arbeitszeitverkürzung für den Schweißprozess. Bei einer relativ hohen Curie-Temperatur muss das Aufheizmittel in Bezug auf Wärmeableitung, Wärmekapazität und Aufheizgeschwindigkeit dahingehend optimiert werden, dass die sich im Aufheizmittel schnell akkumulierende Energie derart an den Kunststoff abgeleitet werden kann, dass dieser nicht beschädigt wird. Wie nachfolgend im Detail beschrieben, lässt sich durch die Verwendung von Materialien mit verschiedenen Curie-Temperaturen der makroskopisch in Erscheinung tretende Übergangsbereich des Verlusts der ferromagnetischen Eigenschaften spreizen bzw. verschieben und so die Funktion der Temperaturbegrenzung zusätzlich gestalten.

Bei manchen Ausführungsformen weist die bandartige Struktur mehrere ferromagnetische oder ferrimagnetische Materialien auf, welche unterschiedliche Curie-Temperaturen haben. Dies hat den Vorteil, dass durch eine geeignete Mischung der Mengenverhältnisse (Massen- oder Volumenverhältnisse) der unterschiedlichen ferromagnetischen Materialien eine für die jeweilige Anwendung optimale mittlere Curie-Temperatur eingestellt werden kann. Die beschriebenen unterschiedlichen ferromagnetischen Materialien können auch dazu führen, dass dem Aufheizmittel zumindest zwei verschiedene Curie-Temperaturen zugeordnet sind. Dies bedeutet in der Praxis, dass zu Beginn einer Verbindungsvorgangs, wenn die Temperatur des Aufheizmittel und des umgebenden Kunststoffmaterial noch relativ gering ist, beide Materialien zu einem induktiven Heizen mit einer vergleichsweise hohen Heizleistung beitragen. Wenn die Temperatur später einen Wert erreicht, der über der Curie-Temperatur desjenigen Materials liegt, welches die geringere Curie-Temperatur hat, dann wird der Heizvorgang nur noch mit einer vergleichsweise geringen Heizleistung stattfinden. Dies ermöglicht auf vorteilhafte Weise eine besonders genaue Steuerung des thermischen Verbindens der beiden Objekte.

Es wird darauf hingewiesen, dass eine derartige stufenartige Steuerung der Heizleistung im Prinzip mit einer beliebigen Anzahl an ferro- oder ferrimagnetischen Materialien mit jeweils unterschiedlichen Curie-Temperaturen realisiert werden kann. In der Praxis sollte es jedoch für viele Anwendungen ausreichend sein, wenn die bandartige Struktur lediglich zwei ferro- oder ferrimagnetische Materialien mit unterschiedlichen Curie-Temperaturen aufweist.

Gemäß einem Ausführungsbeispiel der Erfindung weist die bandartige Struktur ein elektrisch nicht-leitfähiges Matrixmaterial und eine Vielzahl von magnetischen, insbesondere ferromagnetischen und/oder ferrimagnetischen und/oder elektrisch leitfähigen Partikeln auf, welche in dem Matrixmaterial eingebettet sind und welche elektrisch voneinander isoliert sind. Dies hat den Vorteil, dass das beschriebene Aufheizmittel, welches einen Kurzschlussstrom unterbindet, aus Sicht des Anwenders für einen induktiven Schweißvorgang genau so gehandhabt werden kann, wie das bei herkömmlichen Aufheizmittels der Falls ist. Insbesondere kann das Aufheizmittel wie üblich vollständig und mit einem gewissen räumlichen Überlapp der beiden (Längs)Enden um das erste innere Objekt herum gewickelt werden.

Das Matrixmaterial kann beispielsweise ein Kunststoffband sein. Die Partikel können aus einem ferromagnetischen Material bestehen oder zumindest ein solches aufweisen. Das Matrixmaterial kann beispielsweise Polyethylen (PE) sein.

Gemäß einem weiteren Ausführungsbeispiel der Erfindung weisen die Partikel Ferrite auf. Die Ferrite können als mikro- oder als nanoskalierte Partikel vorliegen.

Gemäß einem weiteren Ausführungsbeispiel der Erfindung hat das Matrixmaterial einen spezifischen elektrischen Widerstand von wenigstens 1 Ohm/mm2, insbesondere wenigstens 100 Ohm/mm2 und weiter insbesondere wenigstens 10000 Ohm/mm2. Dadurch wird sichergestellt, dass in dem Aufheizmittel makroskopische Ströme und insbesondere Kurzschlussströme unterbunden oder zumindest auf einen verschwindend kleinen Stromwert reduziert werden.

Das Matrixmaterial kann ein geeignetes Kunststoffmaterial sein oder ein solches aufweisen. Das Kunststoffmaterial kann unterschiedlich sein zu oder gleich sein wie das Kunststoffmaterial von zumindest einem der beiden miteinander zu verschweißenden Objekte.

Gemäß einem weiteren Ausführungsbeispiel der Erfindung weist das Matrixmaterial zumindest eines der folgenden Materialien auf:

(a) Thermoplastische Polymere, insbesondere Polyolefine wie z.B. PE, PP, PB, CPE, COC, EVA;
(b) Polystyrol und deren Co-Polymere wie z.B. ABS SAN;
(c) Elastomere wie z.B. TPE, EPDM, SBR, NBR, BR;
(d) Polyester wie z.B. PET, PBT, PEN, PLA, PVA;
(e) Halogen-Polymere wie z.B. PVC, PVF, PVDC, PVDF, PTFE;
(f) Polyamide wie z.B. PA4.2, 4.6, 6.6, 6.10, 4.10, PA6, 11, 12, sowie jeweils Co-Polymere und/oder Gemische davon.

Gemäß einem weiteren Ausführungsbeispiel der Erfindung weist die bandartige Struktur ferner zwei flächige Trägerelemente auf, wobei das Aufheizhilfsmaterial zwischen den beiden Trägerelementen eingebettet ist.

Bei einem Schweißvorgang ist eines der beiden Trägerelemente dem ersten inneren Objekt zugewandt und das zweite der beiden Trägerelemente ist dem zweiten äußeren Objekt zugewandt. Dadurch können auf vorteilhafte Weise die beiden Trägerelemente hinsichtlich ihrer mechanischen, strukturellen und/oder chemischen Eigenschaften an das jeweilige Objekt angepasst werden. Bei Bedarf können die beiden Trägerelemente aus dem gleichen Material oder aus unterschiedlichen Materialien bestehen.

Die Trägerelemente können beispielsweise als Halbzeug vorkonfigurierte Trägerfolien sein. Dies kann die Herstellung des beschriebenen Aufheizmittels erheblich erleichtern. Zumindest eine der beiden Trägerfolien kann eine sog. Schmelzkleberfolie sein, welche in der Lage ist, auch nicht thermoplastische Materialien zu verbinden.

Erfindungsgemäß ist in der bandartigen Struktur eine Mehrzahl von Öffnungen ausgebildet. Die Öffnungen sind derart dimensioniert, dass aufgeschmolzenes Kunststoffmaterial des ersten inneren Objekts und/oder des zweiten äußeren Objekts eindringen und sich mit aufgeschmolzenem Kunststoffmaterial des jeweils anderen Objekts verbinden kann. Alternativ oder in Kombination sind die Öffnungen mit einem Kunststoffmaterial gefüllt, welches sich mit aufgeschmolzenem Kunststoffmaterial des ersten inneren Objekts und/oder des zweiten äußeren Objekts verbinden kann.

Es wird darauf hingewiesen, dass bei einem durchgängig elektrisch leitfähigen Aufheizmittel für die negativen Auswirkungen einer Asymmetrie bzgl. der Stromrichtung insbesondere die in der bandartigen Struktur ausgebildeten Öffnungen verantwortlich wären. Diese führen nämlich dazu, dass die bandartige Struktur bei einer näherungsweisen Betrachtung eine Vielzahl von elektrisch leitfähigen "Stegen" aufweist. Im Falle eines Kurzschlussstromes würden die Stege entlang der Umfangsrichtung einen größeren Strom tragen als die Stege in Axialrichtung.

Somit können im aufgeheizten Zustand beide Kunststoffmaterialien durch die in der bandartigen Struktur ausgebildeten Öffnungen hindurchfließen, so dass sich eine Mehrzahl von kleinen Schweißverbindungen durch die Öffnungen in der bandartigen Struktur hindurch ausbilden. Dies führt nach einem Abkühlen zu einer besonders hohen Festigkeit der resultierenden thermischen Verbindung.

Erfindungsgemäß ist die bandartige Struktur entlang des Umfangsverlaufs stofflich unterbrochen. Dies bedeutet, dass die unterbrochene Leitfähigkeit ggf. u.a. durch eine makroskopische Unterbrechung der um das erste innere Objekt herum angelegten bandartigen Struktur verursacht ist. Anschaulich ausgedrückt gibt es keinen räumlichen Überlapp zwischen den beiden (einander gegenüberliegenden) Enden des Aufheizmittels bzw. der bandartigen Struktur, deren räumliche Lage durch eine Längsachse der bandartigen Struktur bestimmt ist, welche beim Schweißvorgang mit der Umfangsrichtung zusammenfällt. Zwischen den beiden Enden des Aufheizmittels befindet sich eine makroskopische Unterbrechung.

Wenn das Aufheizmittel nicht nur elektrisch sondern auch gegenständlich unterbrochen sein soll, dann kann das Aufheizmittel zwischen die beiden Objekte auch mit einem gewissen mechanischen Spiel eingelegt werden, ohne dass zu besorgen ist, dass während des Schweißvorgangs bei einem gewissen Schrumpfen des zweiten äußeren Objekts, insbesondere einer Muffe, Wülste, Aufwerfungen und/oder Verwerfungen beliebiger Art entstehen.

Die beschriebene stoffliche Unterbrechung hat den Vorteil, dass die bandartige Struktur aus einem elektrisch leitfähigen Volumen- oder Flächenmaterial bzw. aus einem ferromagnetischen Volumen- oder Flächenmaterial mit all den positiven Eigenschaften insbesondere hinsichtlich einer hohen mechanischen Festigkeit und/oder einer hohen Temperaturbeständigkeit hergestellt werden kann, wobei trotzdem Kurzschlussströme unterbunden sind. In solchen Materialien findet aufgrund des bekannte Skin-Effekts, insbesondere bei höheren Frequenzen, die Erhitzung des Aufheizmittels basierend auf Wirbelströmen bevorzugt nahe der Oberfläche des betreffenden Körpers statt. Dies hat zur Folge, dass sich ausdünnende Randzonen (z.B. Enden der bandartigen Struktur) schneller erhitzen als die Zentren der besagten Körper. Dies fördert auf vorteilhafte Weise insbesondere die Erwärmung von Außenbereichen, was zu einer weiteren räumlichen Homogenisierung der Wärmeentwicklung führt.

Gemäß einem weiteren Ausführungsbeispiel der Erfindung weist zumindest ein Ende der bandartigen Struktur eine gewellte, gezackte und/oder mäanderförmige Kontur auf.

Aufgrund des vorstehend beschriebenen Skin Effects erfolgt eine Ausbildung von Wirbelströmen (abhängig von der induktiven Erregungsfrequenz) mehr oder weniger stark bevorzugt an der Oberfläche eines elektrisch leitfähigen und insbesondere ferromagnetischen Material. Die beschriebene nicht glatte Kontur des zumindest einen Endes sorgt jedoch für eine Vergrößerung der Oberfläche. Dadurch kann auch trotz einer einen Kurzschlussstrom zuverlässig unterbindenden makroskopischen Unterbrechung im Bereich der Unterbrechung eine ausreichende Erhitzung des Kunststoffmaterials gewährleistet werden, weil die Konzentration von Wirbelströmen im Bereich des zumindest einen Endes für eine entsprechend stärkere Aufheizung sorgt.

Bevorzugt weisen beide Enden der bandartigen Struktur eine solche nicht-glatte Kontur auf. Dadurch wird die Unterbrechung von beiden Seiten besonders stark beheizt. Anders ausgedrückt können sich beide Enden die erforderliche verstärkte Heizleistung teilen, so dass die Homogenität der Beheizung infolge der Unterbrechung nur wenig stark beeinträchtigt ist.

Anschaulich ausgedrückt kann durch eine nicht-glatte Kontur bevorzugt an beiden Enden des Aufheizmittels eine längere Unterbrechung realisiert werden, ohne dass eine mangelhafte Verschweißung zu besorgen wäre. Die beiden nicht-glatten Enden können nämlich für eine ausreichende Aufheizung der Unterbrechung sorgen.

Erfindungsgemäß weist das Aufheizmittel ferner einen bandartigen Träger auf, an welchem die bandartige Struktur angebracht ist. Dabei weist entlang einer Längsrichtung der bandartigen Struktur der bandartige Träger eine größere Abmessung auf als die bandartige Struktur. Außerdem besteht der bandartige Träger aus einem elektrisch nicht-leitfähigen Trägermaterial. Dies hat den Vorteil, dass das Aufheizmittel so lang sein kann, dass es für einen induktiven Schweißvorgang vollständig um das erste innere Objekt herum gewickelt werden kann, wobei durch eine entsprechend kurze Ausbildung der bandartige Struktur sichergestellt werden kann, dass das Aufheizmittel keine geschlossene Sekundärspule mit den vorstehend beschriebenen Nachteilen der Entstehung von Kurzschlussströmen darstellt.

Der bandartige Träger kann eine elektrische Leitfähigkeit haben, welche gleich ist wie die elektrische Leitfähigkeit des vorstehend beschriebenen Matrixmaterials. Ferner kann der bandartige Träger eine als Halbzeug vorkonfigurierte Trägerfolie sein oder eine solche aufweisen. Die Trägerfolie kann auch eine sog. Schmelzkleberfolie sein, welche in der Lage ist, auch nicht thermoplastische Materialien zu verbinden. Bevorzugt kann der bandartige Träger auch zwei Trägerfolien aufweisen, wobei sich die (vergleichsweise kurze) bandartige Struktur zwischen den beiden (vergleichsweise langen) Trägerfolien befindet. Dabei können die beiden Trägerfolien hinsichtlich ihrer mechanischen, strukturellen und/oder chemischen Eigenschaften an das jeweilige Objekt angepasst werden. Bei Bedarf können die beiden Trägerfolien aus dem gleichen Material bestehen oder das gleiche Material aufweisen. Selbstverständlich können jedoch auch unterschiedliche Materialien verwendet werden.

Gemäß einem weiteren Ausführungsbeispiel der Erfindung weist die bandartige Struktur einen schichtweisen Aufbau von unterschiedlichen Materialien auf, welche insbesondere eine unterschiedliche Härte, eine unterschiedliche Elastizität und/oder eine unterschiedliche Duktilität aufweisen.

Durch eine geeignete Einstellung der Mengenverhältnisse der unterschiedlichen Materialien ist es somit möglich, die mechanischen Streckeigenschaften des Aufheizmittels so zu modifizieren, dass sich bei einem Verstecken gezielt Verformungen ergeben, welche zu einer Verbesserung, das heißt zu einer erhöhten mechanischen Festigkeit, der erzeugten Schweißverbindung beitragen. Die Verformungen können insbesondere Höhenunterschiede und/oder Verrundungen am Übergang zwischen der Oberfläche des bandartigen Materials in die Öffnungen sein.

Nach derzeitiger Erkenntnis eignet sich für den beschriebenen schichtweisen Aufbau insbesondere eine Kombination aus zwei oder mehr Schichten der folgenden metallischen Legierungen: Cu-Al, Fe-Cu, Fe-Edelstahl, CU-Sn, Fe-Al, Al-Mg. Um für die jeweilige Anwendung optimale mechanische Streckeigenschaften zu erzielen, ist es auch möglich, innerhalb einer Legierung die Verhältnisse zwischen den an der Legierung beteiligten Metallen anzupassen.

Um den Einfluss verschiedener Elastizitäten auf die Qualität und insbesondere auf die Festigkeit einer Schweißverbindung zu untersuchen, wurden von den Erfindern eine Reihe von Experimenten durchgeführt. Dabei hat sich gezeigt, dass durch gezieltes Einstellen der Längselastizität der bandartigen Struktur eine deutliche Verbesserung des Schweißergebnisses erreicht werden kann. Dabei ist die Längselastizität die Elastizität der bandartigen Struktur entlang der vorstehen definierten Tangentialrichtung. Bei einem Verschweißen von Rohren ist diese längliche Erstreckung die tangentiale Richtung entlang der zylindrischen Mantelfläche des betreffenden Rohres.

Bei von den Erfindern durchgeführten Experimenten hat sich insbesondere ergeben, dass bei zu kleiner Längselastizität, d.h. wenn das Aufheizmittel zu steif bzw. zu starr ist, das Aufheizmittel nicht über die ganze Verbindungsfläche

**EP 3 529 055 B1**

den nötigen Kontaktdruck aufbauen kann, der für eine systematische und bevorzugt anisotrope Verflüssigung von dem betreffenden Kunststoffmaterial erforderlich ist. Ebenso ist auch bei einer zu großen Längselastizität an keiner Stelle der gewünschte Anpressdruck vorhanden. Es hat sich gezeigt, dass Längselastizitäten von 30 N bis 300 N für eine relative Dehnung von 0,1% und insbesondere von 60 N bis 200 N für eine relative Dehnung von 0,1% zu besonders guten Schweißergebnissen führen. Es wird darauf hingewiesen, dass hier die Längselastizitäten der Federkonstante der bandartigen Struktur entspricht (vgl. Hook'sches Gesetz).

Der Vollständigkeit halber wird darauf hingewiesen, dass der schichtweise Aufbau auch mehrere Schichten von Materialien mit unterschiedlichen Curie-Temperaturen aufweisen kann. Dies hat den Vorteil, dass zum Einstellen von zumindest einer für den speziellen Anwendungsfall geeigneten Curie-Temperatur keine Legierung aus unterschiedlichen Materialien mit verschiedenen Curie-Temperaturen hergestellt werden muss.

Gemäß einem weiteren Ausführungsbeispiel der Erfindung weist das Aufheizmittel ferner eine Haftkraftveränderungsschicht auf, welche an zumindest einer Oberfläche der bandartigen Struktur angebracht oder ausgebildet ist.

Die Haftveränderungsschicht kann auf vorteilhafte Weise dazu beitragen, dass das Fließverhalten von aufgeschmolzenem Kunststoff, welcher mit dem Aufheizmittel in Kontakt kommt, in Hinblick auf eine nach dem Abkühlen besonders stabile Schweißverbindung eingestellt werden kann. Wenn sich nämlich im Verlauf des thermischen Verbindens bzw. des Verschweißens die Oberfläche der beiden Kunststoffobjekte verflüssigt, dann können Zustände von gefangenen Luftblasen entstehen, falls sich um die jeweilige Erwärmungsstelle herum bereits alle pneumatischen Verbindungen "zur Außenwelt" geschlossen haben. Die dadurch auftretende Druckerhöhung wirkt hilfreich für das Unterschützen der gewünschten Vorzugsfließrichtung des flüssigen Kunststoffes durch das Aufheizmittel hindurch. Dabei ist es von Bedeutung, dass die Benetzung der Oberfläche des Aufheizmittels von optimalen adhäsiven Effekten begleitet wird, so dass der Weg des geringsten Widerstandes des flüssigen Kunststoffes der Weg durch die Öffnungen des Aufheizmittels hindurch ist und Luftblasen nicht im Innern der Öffnungen verbleiben. Dadurch kann verhindert werden, dass der aufgeschmolzene Kunststoff das Aufheizmittel (durch die Öffnungen hindurch) durchdringen kann.

Gemäß einem weiteren Ausführungsbeispiel der Erfindung weist die Haftkraftveränderungsschicht (i) an der Oberfläche der bandartigen Struktur eine Haftkraftverstärkungsschicht weist und/oder (ii) an den Seitenwänden der Öffnungen eine Haftkraftreduzierungsschicht aufweist.

Durch eine Haftkraftverstärkung zwischen der Oberfläche der bandartigen Struktur und dem jeweiligen Kunststoffobjekt kann nach einem Abkühlen zusätzlich zu der Schweißverbindung zwischen beiden Kunststoffobjekten auch eine feste Verbindung zwischen der Oberfläche der bandartigen Struktur und dem jeweiligen Kunststoffobjekt hergestellt werden. Dazu sind bevorzugt beide (flächigen) Oberflächen der bandartigen Struktur mit einer Haftkraftverstärkungsschicht versehen.

Durch eine Haftkraftreduzierungsschicht im Bereich der Öffnungen kann das Fließverhalten von verflüssigtem Kunststoff durch die bandartige Struktur hindurch verbessert werden. Dadurch ergibt sich nach dem Abkühlen eine mechanisch besonders stabile direkte Verbindung zwischen beiden Kunststoffobjekten.

Bei manchen Ausführungsformen ist die Haftkraftveränderungsschicht eine Oxidschicht. Alternativ oder in Kombination kann die Haftkraftveränderungsschicht auch Carbonate aufweisen.

Eine Oxidschicht und insbesondere eine Metalloxidschicht kann, so haben es die Erfinder des beschriebenen Aufheizmittels herausgefunden, auch eine (gezielt ausgebildete) Oxidschicht an der Oberfläche der bandartigen Struktur sein. Derartige Oxidschichten können beispielsweise gebildet werden durch eine gezielte Lagerung der bandartigen Struktur in einer Atmosphäre, die wenigstens 10% einer Sauerstoffmodifikation, also naszierender (atomarer) Sauerstoff (O), molekularer Sauerstoff ($O_2$) und/oder Ozon ($O_3$) enthält, und der Rest der Atmosphäre aus einem Inertgas gebildet ist. Das Inertgas kann ein Edelgas, bevorzugt He, Ar, Ne und/oder Stickstoff sein.

Die Metalloxidschicht kann mindestens eines der folgenden Elemente enthalten: Fe, Cr, Ni, allenfalls auch Cu. Al, Zn, Sn sowie Seltene Erden Metalle. Des Weiteren können die Metalloxide speziell an der Oberfläche Anteile von mindestens einem der folgenden Elemente enthalten: Au, Ag, Cu, Rh.

Als besonders wirksam haben sich in diesem Zusammenhang Oberflächenschichten erwiesen, die zusätzlich zu den Metalloxiden auch Carbonate enthalten. Dies kann durch Zusatz von geringen Mengen an $CO_2$ erreicht werden, wobei die geringe Menge an $CO_2$ weniger als 10 Gewichtsprozent (Gew.%) und bevorzugt weniger als 1 Gew% beträgt, um die Bildung der gewünschten Metalloxide nicht zu sehr zugunsten von Carbonaten zu verschieben.

Eine besonders geeignete Schichtzusammensetzung kann beispielsweise bei Temperaturen von 5°C bis 120°C, bevorzugt von 15°C bis 80°C, über einen Zeitraum von wenigstens 48 Stunden, bevorzugt wenigstens 96 Stunden, gebildet werden. Um die Reaktionsdauer des Gemisches aus Sauerstoff, Kohlendioxid und/oder Inertgas deutlich zu verringern, kann die Oberfläche der bandartigen Struktur mit einem atomaren Plasma, welches neben Schutzgas (vorzugsweise Argon) auch die reaktiven Gasbestandteile $O_2$ und $CO_2$ enthält, beaufschlagt werden. Dadurch kann die gewünschte Haftveränderungsschicht innerhalb von wenigen Sekunden oder sogar Sekundenbruchteilen aufgebaut werden. Ferner können auch andere Elemente wie beispielsweise Si, B, Ti und/oder Zr durch Zusatz entsprechender Precursorgase in die Oberfläche der bandartigen Struktur integriert werden. In diesem Zusammenhang hat sich herausgestellt, dass insbesondere Si und Ti zur Herstellung einer besonders geeigneten Haftveränderungsschicht beitragen können. Durch eine geeignete Auswahl der Zusammensetzung der Haftveränderungsschicht können deren gewünschte (Haft)Eigenschaften eingestellt werden.

Bei manchen Ausführungsformen haben die Oxidschichten eine Schichtdicke von kleiner als $10\mu m$, insbesondere kleiner als 500nm, vorzugsweise kleiner als 50nm oder idealerweise kleiner als 10nm.

Es wird darauf hingewiesen, dass bei einem schichtweisen Aufbau von Oxiden mit den erwähnten Eigenschaften im Sinne einer Haftungssteuerung insbesondere sehr dünne Schichten von Vorteil sind, weil damit der negative Einfluss der Sprödigkeit von Oxiden minimiert wird und trotzdem die haftungssteuernden Eigenschaften schon voll ausgeprägt sind. Bereits mit Schichtdicken unter 10nm (typsicherweise 1nm bis 5nm) wurden bei experimentellen Untersuchungen sehr gute Ergebnisse erzielt.

Gemäß einem weiteren Ausführungsbeispiel der Erfindung haben die Öffnungen einen mittleren Abstand s voneinander, welcher in Bezug zu einer Dicke d der bandartigen Struktur zumindest eine der folgenden Gleichungen erfüllt:

$$0,5 < s/d < 2; \quad 0,7 < s/d < 1,5; \quad 0,8 < s/d < 1,3; \quad 0,9 < s/d < 1,1.$$

Die beschriebenen Öffnungs- bzw. Lochgeometrien führen, so hat sich in experimentellen Untersuchungen herausgestellt, zu einer qualitativ besonders festen Schweißverbindung. Dabei können die Öffnungen entweder (a) regelmäßig (mit einem festen Versatz zwischen in verschiedenen Richtungen benachbarten Öffnungen) oder (b) unregelmäßig angeordnet sein.

Anschaulich ausgedrückt ist neben der chemischen Oberflächenbeschaffenheit der bandartigen Struktur also auch deren Geometrie maßgeblich für die Qualität einer Schweißung. Die Endfestigkeit einer Schweißverbindung kann bei einer geeigneten Loch- bzw. Öffnungsgeometrie deshalb besonders hoch sein, weil sich nach dem Verfestigen des verflüssigten Kunststoffes keine anisotropen Festigkeitswerte in Bezug auf Scherkräfte zeigen. Auch ein Abschälen von Teilen eines Kunststoffobjekts kann durch die Wahl einer geeigneten Lochgeometrie verhindert werden, wobei ein Abschälen insbesondere ein räumliches Trennen eines Bereiches mit zwischenzeitlich verflüssigten Kunststoff von einem Bereich mit stets festem Kunststoff umfassen kann.

In absoluten Zahlen kann bei bestimmten Ausführungsformen der mittlere Abstand s im Bereich zwischen 0,1mm und 5mm liegen. Gleiches gilt für die Dicke d, welche ebenfalls im Bereich zwischen 0,1mm und 5mm liegen kann.

Gemäß einem weiteren Ausführungsbeispiel der Erfindung ist ein Übergang zwischen der flächigen Oberfläche der bandartigen Struktur und einer Öffnung verrundet. Dadurch können auf vorteilhafte Weise "scharfe Wegänderungen" bzw. abrupte Richtungsänderungen des flüssigen Kunststoffs auf seinen Weg in die betreffende Öffnung hinein vermieden werden. Dies kann zu einer signifikanten Verbesserung der Fließverhaltens führen.

Unter dem Begriff "Verrundung" kann in diesem Zusammenhang insbesondere verstanden werden, dass der Übergang von der flächigen Oberfläche der bandartigen Struktur in die betreffende Öffnung frei von Ecken und Kanten ist. Die Verrundung muss also nicht zwingend einen Radius eines gedachten Kreises haben.

Im Falle von zylindrischen Öffnungen ist der Übergang bei einer Draufsicht auf die bandartige Struktur ein Kreis bzw. ein Kreisring. Dabei hängt die Breite des Rings von dem Ausmaß der Verrundung ab. Eine besonders einfache Verrundung kann mit einem Senken realisiert werden, welches beispielsweise mittels eines Senkkopfbohrers durchgeführt wird. Dabei erhält der Bereich der Verrundung die Form eines Kegelstumpfes.

Bei manchen Ausführungsformen hat die Verrundung einen Radius von mehr als $10\mu m$, insbesondere mehr als $70\mu m$ und weiter insbesondere mehr als $300\mu m$.

Bei anderen Ausführungsformen hat die Verrundung einen Radius von mehr als $1\mu m$, insbesondere mehr als $3\mu m$, und weiter insbesondere mehr als $6\mu m$.

Gemäß einem weiteren Ausführungsbeispiel der Erfindung zumindest einige der Öffnungen jeweils eine Längsachse aufweisen, welche mit einer Flächennormale der Oberfläche der bandartigen Struktur einen Winkel von ungleich Null bilden.

Anschaulich ausgedrückt sind zumindest einige der in der bandartigen Struktur ausgebildeten Öffnungen schräge Öffnungen. Diese führen dazu, dass in einer Fließrichtung die Richtungsänderung des flüssigen Kunststoffes auf seinem Weg in die Öffnung hinein vergleichsweise klein ist (insbesondere kleiner als 90°). Auch wenn in der entgegengesetzten Fließrichtung die Richtungsänderung des flüssigen Kunststoffes auf seinem Weg in die Öffnung hinein größer ist (insbesondere größer als 90°), kann eine solche Anisotropie zu einem insgesamt verbesserten Fließverhalten führen. Die Längsachsen verschiedener Öffnungen können auch unterschiedlich sein, wobei in Bereichen mit unterschiedlichen zu erwartenden Fließrichtungen die Längsachsen der betreffenden Öffnungen bevorzugt jeweils gegen die Fließrichtung geneigt sind.

Ferner hat sich gezeigt, dass bei schrägen Öffnungen die mechanische Festigkeit der miteinander verschweißten Kunststoffobjekte erhöht sein kann. Insbesondere bei unterschiedlichen Richtungen bzw. Orientierungen der Öffnungen findet beim Abkühlen und dem damit verbundenen Erstarren eine Verspannung mit der bandartigen Struktur statt. Diese kann nach dem Prinzip von "Spannbeton" die Gesamtfestigkeit der Schweißverbindung erhöhen.

Gemäß einem weiteren Ausführungsbeispiel der Erfindung weist die bandartige Struktur eine Oberfläche mit Erhöhungen und Vertiefungen auf, wobei ein mittlerer Höhenunterschied zwischen den Erhöhungen und den Vertiefungen im Bereich zwischen 0,01mm und 2mm, insbesondere im Bereich zwischen 0,1mm und 1,5mm und weiter insbesondere im Bereich zwischen 0,5mm und 1,2mm liegt

Die Oberflächenrauigkeit kann auf Dickenunterschieden der bandartigen Struktur und/oder auf einer Vielzahl von lokalen Deformationen bzw. Verbiegungen basieren.

Die hier beschriebene Rauigkeit ist insbesondere dann von Vorteil, wenn das zweite äußere Objekt, beispielsweise eine Muffe, aus einem Kunststoff mit thermisch schrumpfenden Eigenschaften besteht. Dadurch wird beim Schweißvorgang ein beidseitiger Anpressdruck auf das Aufheizmittel ausgeübt. Durch die raue Gestaltung der Oberfläche der bandartigen Struktur kann erreicht werden, dass der Übergang zum Kunststoff an den Punkten der größten Erhöhung einen höheren Anpressdruck ausgesetzt ist als in anderen Bereichen. Aufgrund des höheren Drucks wird eine bessere Wärmeankopplung erreicht, was wiederum zu einem früheren Aufschmelzen in der entsprechenden Region führt. Diese Vorschmelze wird nun beim langsamen Erweichen des gesamten Kunststoffteils bevorzugt in die Öffnungen gedrückt, was zu einer besonders festen Verbindung zwischen den Kunststoffteilen führt.

Gemäß einem weiteren Ausführungsbeispiel der Erfindung weist das Aufheizmittel ferner zumindest eine weitere bandartige Struktur auf, welche neben der bandartigen Struktur angeordnet ist. Die weitere bandartige Struktur ist zumindest annähernd parallel zu der bandartigen Struktur orientiert.

Der Abstand zwischen einander benachbarten Bahnen kann beispielsweise zwischen 0,5mm und 50 mm, insbesondere zwischen 0,8mm und 10mm und weiter insbesondere zwischen 1mm und 1,5mm betragen.

Anschaulich ausgedrückt wird das Aufheizmittel mit zumindest zwei separaten Bahnen von bandartigen Strukturen und ggf. geeigneten Trägerelementen bzw. Trägerfolien gebildet. Dies hat den Vorteil, dass mit lediglich einer Art von bandartigen Struktur und ggf. geeigneten Trägerelementen bzw. Trägerfolien Aufheizmittel mit beliebiger Breite hergestellt werden können. Dabei kann das Aufheizmittel mehrstückig sein, d.h. die bandartige Struktur und die zumindest eine weitere bandartige Struktur sind nicht miteinander verbunden und werden vor einem Schweißvorgang separat zwischen die beiden zu verschweißenden Objekte eingelegt.

Die verschiedenen bandartigen Strukturen können jedoch auch (an ihren Längsseiten) miteinander verbunden sein. Dabei kann die Verbindung unmittelbar, beispielsweise mit einer gewissen Überlappung, realisiert sein. Alternativ können die bandartigen Strukturen auch über ein nichtleitendes bzw. nicht ferromagnetisches Material verbunden sein, was in Übereinstimmung mit der vorstehend beschrieben separaten Konfiguration dazu führt, dass in Bezug auf einen induktiven Schweißvorgang das Aufheizmittel zumindest zwei separate Sekundärspulen gebildet sind. Bevorzugt werden für eine (axiale) Verbindung von mehreren bandartigen Strukturen ein breites Trägerelement bzw. eine breite Trägerfolie oder ein breiter bandartiger Träger verwendet.

Gemäß einem weiteren Aspekt der Erfindung wir beschrieben eine Anordnung aufweisend (a) ein erstes inneres Objekt, welches ein erstes Kunststoffmaterial aufweist; (b) ein zweites äußeres Objekt, welches das erste innere Objekt zumindest teilweise umgibt und welches ein zweites Kunststoffmaterial aufweist; und (c) ein Aufheizmittel des vorstehend beschriebenen Typs, welches entlang eines vollumfänglichen Umfangsverlaufs um das erste innere Objekt herum das erste innere Objekt zumindest teilweise umgibt und sich zwischen dem ersten inneren Objekt und dem zweiten äußeren Objekt befindet.

Auch der beschriebenen Anordnung liegt die Erkenntnis zugrunde, dass durch eine gezielte Unterbrechung des Stromflusses entlang der Umfangsrichtung auf einfache Weise verhindert werden kann, dass sich um das erste innere Objekt herum eine Kurzschlusswicklung ergibt, welche bei einem Induktionsschweißvorgang zu einem induzierten Stromfluss (bevorzugt) um das gesamte erste innere Objekt herum führen würde. Dadurch kann, wie bereits vorstehend im Detail erläutert, eine Asymmetrie (der Richtung) des für die Erwärmung verantwortlichen Stromflusses in dem Aufheizmittel verhindert und bei einem induktiven Schweißvorgang eine gleichmäßige Erwärmung des Aufheizmittels gewährleistet werden.

Bevorzugt sind die beiden Kunststoffmaterialien gleich. Dies hat den Vorteil, dass sich gleiche Kunststoffmaterialien besonders gut verbinden, so dass die Festigkeit der resultierenden Schweißverbindung besonders hoch ist.

Bei manchen Ausführungsformen kann das erste Kunststoffmaterial und/oder das zweite Kunststoffmaterial eine Zusammensetzung (aus mehreren Kunststoffen) sein oder ein Additiv aufweisen, welches eine reaktive Veränderung im Zuge der Aufheizung bzw. des Schmelzens bewirkt. Solche Reaktionen können beispielhaft sein:

(A) Vernetzung durch Polymeraddition (also Epoxidgruppe mit Amin, Amid, Säure, Säureanhydrid, Alkohol, Phenol, Thiol oder Isocyanat (auch verkappt mit Amin, Amid, Alkohol, Phenol, Thiol)

(B) Vernetzung durch Wasserstoffelimination durch Peroxide und/oder Azoverbindungen

(C) Verknüpfung von Polymerketten durch Vinylpolymerisation, Silan-Vinyladdition, Thio-click-Addition, Azid-click-Addition

Anschaulich ausgedrückt können also auch reaktive Schmelzkleber in den thermischen Verbindungsvorgang miteinbezogen werden. Insbesondere können ggf. auch die zu verbindenden Polymeroberflächen des ersten inneren (Polymer)Objekts und des zweiten äußeren (Polymer)Objekts in die o.g. Reaktionen eingreifen .

Gemäß einem Ausführungsbeispiel der Erfindung ist das Aufheizmittel in dem ersten inneren Objekt und/oder in dem zweiten äußeren Objekt integriert. Dadurch kann die Handhabung bzw. die Durchführung eines induktiven Schweißvorgangs vereinfacht werden, weil im Falle von einem Verschweißen von lediglich dem ersten inneren Objekt mit dem zweiten äußeren Objekt (abgesehen von einer Spule des Induktionsgenerators) lediglich zwei Objekte von einer Bedienperson gehandhabt werden müssen.

In diesem Zusammenhang wird darauf hingewiesen, dass der Ausdruck "sich zwischen dem ersten inneren Objekt und dem zweiten äußeren Objekt befindet" bei einer zumindest teilweise Integration des Aufheizmittels dahingehend zu verstehen ist, dass sich das Aufheizmittel zwischen zwei voneinander abgewandten Rändern der beiden Objekt befindet, wobei ein erster Rand dem ersten inneren Objekt zugeordnet ist und der zweite äußere Rand dem zweiten äußeren Objekt zugeordnet ist.

Im Falle der vorstehend beschriebenen Ausführungsformen, bei denen die bandartige Struktur ein elektrisch nicht-leitfähiges Matrixmaterial und eine Vielzahl von elektrisch leitfähigen und in das Matrixmaterial eingebettete Partikel aufweist, können die Partikel, insbesondere ferromagnetische Partikel, als kleine elektrisch leitfähige Elemente bereits im Kunststoff des entsprechenden Objekts integriert sein. Das betreffende Objekt mit dem integrierten Aufheizmittel kann mittels eines Zwei-Komponenten Spritzgießverfahrens hergestellt werden. Dabei kann die erste Komponente beispielsweise Polyethylen (PE) sein. Die zweite Komponente kann beispielsweise das Aufheizmittel sein, welches wiederum ein Mix sein kann aus (i) einem elektrisch leitfähigen und insbesondere ferromagnetischen Material geeigneter Größe und (ii) PE.

Gemäß einem weiteren Ausführungsbeispiel der Erfindung weist die Anordnung ferner auf ein drittes inneres Objekt, welches ein drittes Kunststoffmaterial aufweist, wobei (i) das zweite äußere Objekt auch das dritte innere Objekt zumindest teilweise umgibt und wobei (ii) sich das Aufheizmittel auch zwischen dem dritten inneren Objekt und dem zweiten äußeren Objekt befindet. Dies hat den Vorteil, dass mit der beschriebenen Anordnung mehr als zwei Kunststoffobjekte miteinander verbunden sind, so dass sich ein besonders breiter technischer Anwendungsbereich für die beschriebene Anordnung ergibt.

Bevorzugt ist das dritte Kunststoffmaterial das gleiche Kunststoffmaterial wie das erste Kunststoffmaterial und/oder das zweite Kunststoffmaterial. Damit ergeben sich die gleichen Vorteile, die vorstehend für zwei gleiche Kunststoffmaterialien beschrieben sind.

Gemäß einem weiteren Ausführungsbeispiel der Erfindung ist (a) das erste innere Objekt ein Kunststoffrohr, (b) das dritte innere Objekt ein weiteres Kunststoffrohr ist und (c) das zweite äußere Objekt eine Kunststoffmuffe, welche zwei einander zugewandte Enden, ein Ende des Kunststoffrohres und ein weiteres Ende des weiteren Kunststoffrohres, umschließt.

Mit der beschriebenen Anordnung kann auf vorteilhafte Weise eine Rohrleitung gebildet werden, welche aus mehreren Kunststoffrohren zusammengesetzt ist. Um einen widerstandsarmen Durchfluss von einem Fluid an der Stelle der Verbindung der beiden Kunststoffrohre zu gewährleisten, können die beiden stirnseitigen Enden der beiden beteiligten Kunststoffrohren einen möglichst kleinen Abstand voneinander aufweisen.

Die Kunststoffrohre können Fernwärmerohre sein, welche ggf. nach außen und/oder nach innen thermisch isoliert sind. Optional können die Fernwärmerohre in bekannter Weise ein inneres Rohr bzw. ein Kernrohr aus Metall (z.B. Stahl) beinhalten, wobei aneinander gefügte Kernrohre miteinander verschweißt sein können.

Gemäß einem weiteren Aspekt der Erfindung wird ein System beschrieben, welches aufweist (a) eine Anordnung der vorstehend beschriebenen Art und (b) einen Generator zum Erzeugen eines elektromagnetischen Feldes, welches eine Spuleneinrichtung des Generators induktiv mit dem Aufheizmittel koppelt.

Auch dem beschriebenen System liegt die Erkenntnis zugrunde, dass durch eine gezielte elektrische Unterbrechung des Stromflusses entlang der Umfangsrichtung Kurzschlussströme unterbunden werden können und dadurch eine besonders hohe räumlich Homogenität der Erwärmung des Aufheizmittels gewährleistet werden kann. Dadurch können Schweißverbindungen mit besonders hoher Qualität erzeugt werden.

Die Spuleneinrichtung kann eine oder mehrere einzelne Spulen aufweisen.

Gemäß einem Ausführungsbeispiel der Erfindung ist die Spuleneinrichtung in Bezug zu der Anordnung eine offene Spuleneinrichtung. Dies bedeutet, dass die Spuleneinrichtung auch dann um die Anordnung herum gelegt werden kann, wenn die Anordnung drei Objekte aufweist, wie dies bei dem thermisch induktiven Verbinden von zwei (im Prinzip unendlich langen) Kunststoffrohren der Fall ist, welche an ihrer Fügestelle mit einer Muffe verbunden werden. Im Gegensatz zu einer geschlossenen Spuleneinrichtung, welche an einem Rohrende auf das betreffende Rohr aufgestülpt und dann entlang des Rohres zu der Fügestelle geschoben werden muss, reicht es bei der beschriebenen offenen Spuleneinrichtung, wenn diese einfach im Bereich der Muffe um die Anordnung herum gelegt wird. Anschaulich ausgedrückt kann die Spuleneinrichtung wie eine flexible und längliche induktive Herdplatte um die Muffe herum gelegt werden.

Die offene Spuleneinrichtung kann so lang sein, dass sie die Muffe mit einem gewissen Überlapp umgibt. In diesem Fall sollte darauf geachtet werden, dass die induktive Heizleistung um Bereich der Überlappung nicht zu groß wird. Die offene Spuleneinrichtung kann auch gerade so lang sein, dass sie die Muffe ohne Überlappung und auch ohne eine Lücke zwischen den beiden Enden umgibt. Ferner kann die Spuleneinrichtung so kurz sein, dass sich zwischen den beiden Enden eine Lücke ergibt. In diesem Fall muss darauf geachtet werden, dass die induktive Heizleistung im Bereich der Enden ausreichend groß ist, so dass auch im Bereich der Lücke die Muffe ausreichend erwärmt wird.

Eine variable induktive Heizleistung kann beispielsweise durch eine geeignete Ansteuerung bzw. Bestromung von einzelnen Spulenabschnitten und/oder durch eine variable Dichte von Spulendrähten erfolgen.

Gemäß einem weiteren Ausführungsbeispiel der Erfindung weist die Spuleneinrichtung eine Spule mit ineinander verschlungenen nichtkreisförmigen Windungen auf. Dies hat den Vorteil, dass die Spuleneinrichtung auf leicht handhabbare Weise um die Anordnung bestehend aus zumindest zwei miteinander zu verschweißenden Objekten herum gelegt werden kann.

Gemäß einem weiteren Ausführungsbeispiel der Erfindung weist die Spuleneinrichtung eine Mehrzahl von Einzelspulen auf. Dies hat den Vorteil, dass die Geometrie der Spuleneinrichtung auf einfache Weise an den jeweiligen Anwendungsfall angepasst werden kann. Außerdem können bei einer geeigneten Konfiguration der elektrischen Anschlüsse die einzelne Spulen oder Spulengruppen auch individuell angesteuert werden.

Ferner kann jeweils zumindest eine Einzelspule als ein Spulenmodul angesehen werden, welches bei Bedarf an andere Spulenmodule angekoppelt wird. Dadurch kann die Länge der Spuleneinrichtung erhöht werden.

Die Verwendung von mehreren Einzelspulen hat den Vorteil, dass diese insbesondere bei oft sehr rauen Arbeitsbedingungen einzeln verpackt und so vor Verschmutzungen und/oder Beschädigungen geschützt werden können. Ein weiterer Vorteil bei der Verwendung von mehreren Einzelspulen kann darin gesehen werden, dass, sofern diese voneinander getrennt von einem Induktionsgenerator angesteuert bzw. bestromt werden, bei einem Ausfall einer Spule nicht die gesamte Spuleneinrichtung unbrauchbar wird.

Gemäß einem weiteren Aspekt der Erfindung wird ein Verfahren zum thermischen Verbinden zweier jeweils ein Kunststoffmaterial aufweisenden Objekte beschrieben. Dieses Verfahren weist auf (a) ein räumliches Anordnen eines ersten inneren Objekts, eines zweiten äußeren Objekts und eines vorstehend beschriebenen Aufheizmittels, so dass (i) das erste innere Objekt zumindest teilweise von dem zweiten äußeren Objekt umgeben ist und (ii) das Aufheizmittel entlang eines vollumfänglichen Umfangsverlaufs um das erste innere Objekt herum das erste innere Objekt zumindest teilweise umgibt und sich zwischen dem ersten inneren Objekt und dem zweiten äußeren Objekt befindet; (b) ein induktives Erhitzen des Aufheizmittels, so dass sich aufgeschmolzenes Kunststoffmaterial des ersten inneren Objekts und/oder des zweiten äußeren Objekts mit aufgeschmolzenem Kunststoffmaterial des jeweils anderen Objekts direkt oder indirekt verbindet; und (c) ein Abkühlen des Aufheizmittels.

Auch dem beschriebenen Verfahren liegt die Erkenntnis zugrunde, dass in Hinblick auf eine homogene Erwärmung unerwünschte Kurzschlussströme unterbunden werden können, indem ein Kurzschlussstrom entlang der Umfangsrichtung um das erste innere Objekt herum gezielt unterbunden wird.

Gemäß einem weiteren Ausführungsbeispiel der Erfindung weist das induktive Erhitzen auf ein Erregen einer Spuleneinrichtung eines Induktionsgenerators zum Erzeugen von elektromagnetischen Wellen, welche mit dem Aufheizmittel induktiv koppeln. Dabei haben die elektromagnetischen Wellen eine Frequenz, welche größer ist als 8 kHz, insbesondere größer als 15 kHz und insbesondere größer ist als 100 kHz.

Derart hohe Frequenzen können den Vorteil haben, dass die Spuleneinrichtung mit vergleichsweise kleine Spulen realisiert werden kann, die leicht zu handhaben sind und die in einer zumindest annähernd optimalen räumliche Anordnung um die Anordnung mit den zu verschweißenden Objekten herum platziert werden können. Damit kann für verschiedene Anwendungen jeweils eine sehr gut geeignete Konfiguration des Schweißsystems hergestellt werden.

Im Allgemeinen gilt, dass aufgrund des sog. Skin-Effektes mit steigender Frequenz die Eindringtiefe der elektromagnetischen Wellen in das Aufheizhilfsmaterial abnimmt. Mit einer hohen Frequenz kann die bandartige Struktur feine und insbesondere dünne Strukturen aufweisen, in welche die induktive Einkopplung von Energie stattfindet. Bei Erregungsfrequenzen im Megahertzbereich könnten sogar nanoskalig strukturierte Aufheizhilfsmaterialien verwendet werden. Allerdings sind in der Praxis auch Aspekte der elektromagnetischen Verträglichkeit (EMV) zu beachten, welche zumindest für induktive Heizvorgänge bei höheren Frequenzen zunehmend ein Problem darstellt. Daher sollten zu hohe Erregungsfrequenzen vermieden werden.

In diesem Zusammenhang wird darauf hingewiesen, dass mit dem typischen Frequenzbereich von Induktionskochfeldern (20 bis 200 kHz) ein Frequenzband zur Verfügung steht, das für die in diesem Dokument beschriebene Aufheizung des Aufheizmittels lediglich im leistungsunempfindlichen Langwellenbereich in Bezug auf EMV optimiert werden muss. Dies gilt insbesondere für die vorstehend beschriebenen Ausführungsformen mit eingebetteten Partikeln.

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

Bevor bezugnehmend auf die Zeichnung exemplarische Ausführungsbeispiele der Erfindung beschrieben werden, werden im Weiteren einige technische Überlegungen im Zusammenhang mit der Erfindung dargestellt.

Weitere Vorteile und Merkmale der vorliegenden Erfindung ergeben sich aus der folgenden beispielhaften Beschreibung derzeit bevorzugter Ausführungsformen. Die einzelnen Figuren der Zeichnung dieses Dokuments sind lediglich als schematisch und als nicht maßstabsgetreu anzusehen.

Kurze Beschreibung der Zeichnung

Figur 1a   zeigt in einer Draufsicht ein Aufheizmittel mit einer Mehrzahl von Öffnungen, die unregelmäßig in einer bandartigen Struktur ausgebildet sind.

Figur 1b   zeigt in einer Draufsicht ein Aufheizmittel mit einer Mehrzahl von Öffnungen die in einem regelmäßigen Raster angeordnet sind.

Figur 2   zeigt in einer Draufsicht ein Aufheizmittel, welches ein elektrisch isolierendes Matrixmaterial und darin eingebettete ferromagnetische Partikel aufweist.

Figur 3   zeigt in einer Seitenansicht ein Aufheizmittel mit einer bandartigen Struktur, welches ein Matrixmaterial mit eingebetteten ferromagnetischen Partikeln und zwei als Trägerfolien ausgebildete flexible Trägerelemente aufweist.

Figur 4   zeigt in einer vergrößerten Querschnittsansicht ein Aufheizmittel mit einer Öffnung, wobei auf den beiden flächigen Oberflächen des Aufheizmittels jeweils eine Haftverstärkungsschicht und an den Wänden der Öffnung eine Haftreduzierungsschicht ausgebildet ist.

Figur 5   zeigt in einer vergrößerten Querschnittsansicht eine in einem Aufheizmittel ausgebildete Öffnung, welche an einer Oberseite eine Verrundung aufweist.

Figur 6   zeigt in einer vergrößerten Querschnittsansicht ein Aufheizmittel mit einer schrägen Öffnung.

Figur 7   zeigt in einer schematischen Draufsicht eine Anordnung mit zwei inneren Rohren und einer äußeren Muffe, welche allesamt mittels eines Aufheizmittels mit insgesamt vier bandartigen Strukturen miteinander verschweißt wurden.

Figur 8   zeigt in ein System aufweisend (a) einen Induktionsgenerator, (b) eine zu verschweißende Anordnung bestehend aus einem inneren Kunststoffrohr und einer äußeren Muffe und (b) ein stofflich geschlossenes aber elektrisch unterbrochenes Aufheizmittel zwischen dem inneren Rohr und der äußeren Muffe.

Figur 9   zeigt ein System aufweisend (a) einen Induktionsgenerator mit einer offenen Spuleneinrichtung, (b) eine zu verschweißende Anordnung bestehend aus einem inneren Kunststoffrohr und einer äußeren Muffe und (b) ein sowohl stofflich als auch elektrisch unterbrochenes Aufheizmittel zwischen dem inneren Rohr und der äußeren Muffe.

Figur 10   zeigt eine offene Spuleneinrichtung mit verschlungenen Windungen.

Figur 11   zeigt in einer Draufsicht ein Aufheizmittel mit gezackten Enden.

Figur 12   zeigt in einer Querschnittsansicht ein Aufheizmittel, welches eine bandartige Struktur aufweist, die sich auf einem bandartigen Träger befindet.

Figur 13   zeigt in einer Seitenansicht ein Aufheizmittel, welches mehrere ferromagnetische Schichten aufweist, die jeweils eine unterschiedliche Curie-Temperatur haben.

Figur 14   zeigt eine zu verschweißende Anordnung aufweisend ein inneres Kunststoffrohr und eine äußere Muffe, in welchen jeweils ein stofflich geschlossenes aber elektrisch unterbrochenes Aufheizmittel integriert ist.

Detaillierte Beschreibung

Es wird darauf hingewiesen, dass in der folgenden detaillierten Beschreibung Merkmale bzw. Komponenten von unterschiedlichen Ausführungsformen, die mit den entsprechenden Merkmalen bzw. Komponenten von einer anderen Ausführungsform nach gleich oder zumindest funktionsgleich sind, mit den gleichen Bezugszeichen oder mit Bezugszeichen versehen sind, welche in den letzten beiden Ziffern identisch sind mit den Bezugszeichen von entsprechenden gleichen oder zumindest funktionsgleichen Merkmalen bzw. Komponenten. Zur Vermeidung von unnötigen Wiederholungen werden bereits anhand einer vorher beschriebenen Ausführungsform erläuterte Merkmale bzw. Komponenten an späterer Stelle nicht mehr im Detail erläutert.

Ferner wird darauf hingewiesen, dass die nachfolgend beschriebenen Ausführungsformen lediglich eine beschränkte Auswahl an möglichen Ausführungsvarianten der Erfindung darstellen. Insbesondere ist es möglich, die Merkmale einzelner Ausführungsformen in geeigneter Weise miteinander zu kombinieren, so dass für den Fachmann mit den hier explizit dargestellten Ausführungsvarianten eine Vielzahl von verschiedenen Ausführungsformen als offensichtlich offenbart anzusehen sind.

Außerdem wird darauf hingewiesen, dass raumbezogene Begriffe, wie beispielsweise "vorne" und "hinten", "oben" und "unten", "links" und "rechts", etc. verwendet werden, um die Beziehung eines Elements zu einem anderen Element oder zu anderen Elementen zu beschreiben, wie in den Figuren veranschaulicht. Demnach können die raumbezogenen Begriffe für Ausrichtungen gelten, welche sich von den Ausrichtungen unterscheiden, die in den Figuren dargestellt sind. Es versteht sich jedoch von selbst, dass sich alle solchen raumbezogenen Begriffe der Einfachheit der Beschreibung halber auf die in den Zeichnungen dargestellten Ausrichtungen beziehen und nicht unbedingt einschränkend sind, da die jeweils dargestellte Vorrichtung, Komponente etc., wenn sie in Verwendung ist, Ausrichtungen annehmen kann, die von den in der Zeichnung dargestellten Ausrichtungen verschieden sein können.

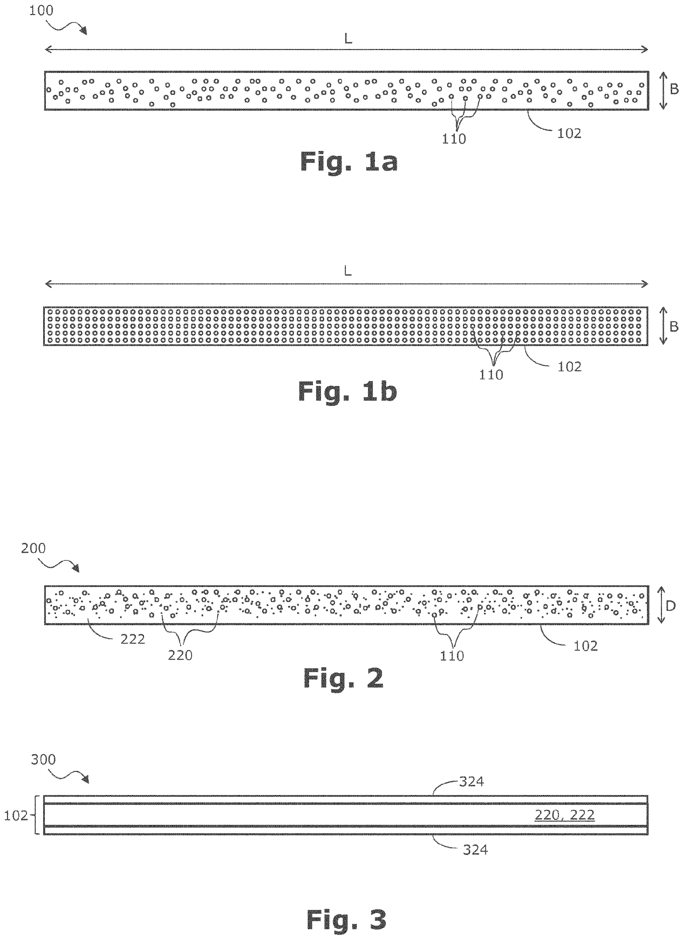

**Figur 1a** zeigt in einer Draufsicht ein Aufheizmittel 100. Das Aufheizmittel 100 besteht im Wesentlichen aus einer bandartigen Struktur 102, in welcher eine Mehrzahl von Öffnungen 110, beispielsweise mittels Stanzens, ausgebildet ist. Gemäß dem hier dargestellten Ausführungsbeispiel sind die Öffnungen 110 räumlich unregelmäßig angeordnet. Wie vorstehend eingehend erläutert, ermöglichen die Öffnungen bei einem Schweißvorgang ein Durchfließen von aufgeschmolzen Kunststoffmaterial durch die bandartige Struktur 102.

Bei bevorzugten Ausführungsbeispielen liegt eine Länge L der bandartigen Struktur 102 in einem Bereich von 40mm bis 3200mm und insbesondere im Bereich von 60mm bis 800mm. Ein typisches Verhältnis zwischen der Länge L und einer Breite B der bandartigen Struktur 102 ist kleiner als 1:10, insbesondere kleiner als 1:100.

**Figur 1b** zeigt in einer Draufsicht ein Aufheizmittel 200 gemäß einem weiteren Ausführungsbeispiel der Erfindung. Hier sind die Öffnungen 110 in einem regelmäßigen Raster angeordnet. In anderen nicht dargestellten Ausführungsformen sind die Öffnungen so gegeneinander versetzt, dass sich ebenfalls ein regelmäßiges Muster ergibt.

Sowohl regelmäßig als auch unregelmäßig angeordnete Öffnungen 110 können einen mittleren Abstand zueinander haben, welcher im Bereich zwischen 0,1mm und 5mm und insbesondere im Bereich zwischen 0,5mm und 3mm liegt.

Die bandartige Struktur 102 kann aus einem gelochten Metallband bestehen. Das ferromagnetische Material der bandartigen Struktur 102 kann beispielsweise Stahl sein. Um eine zusätzliche nicht dargestellte Konturierung zu erreichen, kann das gelochte Metallband ein mittels einer ausreichenden Zugkraft gestrecktes Metallband sein.

Wie bereits vorstehend beschrieben, muss die bandartige Struktur 102 nicht zwingend aus einem ferromagnetischen Material bestehen. Neben ferrimagnetischen Materialien können grundsätzlich alle Materialien verwendet werden, welche induktiv erhitzt werden können. Solche Materialien werden in diesem Dokument allgemein als Aufheizhilfsmaterialien bezeichnet. Ein geeignetes Material, bei welchem die Aufheizung vor allem aufgrund der elektrischen Leitfähigkeit und der daraus resultierenden Wirbelströme basiert, ist z.B. das nicht magnetische Material Aluminium.

Die bandartige Struktur 102 kann bei anderen Ausführungsformen ein gewobenes oder geflochtenes Gelege aus Einzeldrähten sein. Diese können optional eine funktionale Beschichtung für eine verbesserte Wärmeleitung, einen Korrosionsschutz, etc. haben.

**Figur 2** zeigt in einer Draufsicht ein Aufheizmittel, welches ein elektrisch isolierendes Matrixmaterial und darin eingebettete ferromagnetische Partikel aufweist. Gemäß dem hier dargestellten Ausführungsbeispiel besteht das Matrixmaterial aus Polyethylen (PE) oder weist dieses zumindest auf. Die Partikel können eine mittlere Größe mit einem Durchmesser von weniger als 1 mm, insbesondere weniger als 0,1 mm und weiter insbesondere weniger als 0,01 mm haben. Gemäß dem hier dargestellten Ausführungsbeispiel sind die Partikel sind Ferrite.

Die vergleichsweise kleinen ferromagnetischen Partikel haben den Vorteil, dass für eine induktive Erwärmung sehr hohe Frequenzen verwendet werden können. Größenordnungen für geeignete Frequenzen sind bereits vorstehend genannt. Bei hohen Frequenzen können, wie ebenfalls vorstehend erläutert, Spuleneinrichtungen mit verschiedenen für den jeweiligen Anwendungsfall geeigneten Geometrien verwendet werden, um das für eine induktive Erwärmung erforderliche elektromagnetische Feld zu erzeugen.

**Figur 3** zeigt in einer Seitenansicht ein Aufheizmittel 300 mit einer bandartigen Struktur, welches ein Matrixmaterial 222 mit eingebetteten ferromagnetischen Partikeln 220 und zwei als Trägerfolien ausgebildete flexible Trägerelemente 324 aufweist. Das Matrixmaterial 222 befindet sich zwischen den beiden Trägerfolien 324. Die Trägerelemente 324 können mit einem Klebstoff versehene Folien sein, an welchem das Matrixmaterial anhaftet. Eine solche schichtweise Struktur des Aufheizmittels 300 ermöglicht eine einfache Handhabung des Aufheizmittels.

Gemäß dem hier dargestellten Ausführungsbeispiel hat das schichtweise aufgebaute Aufheizmittel 300 eine Dicke D von 0,5 $\mu$m. Es können jedoch auch andere Dicken von 0,1 mm bis 3 mm, insbesondere von 0,2 mm bis 2 mm und weiter insbesondere von 0,3 mm bis 1 mm verwendet werden.

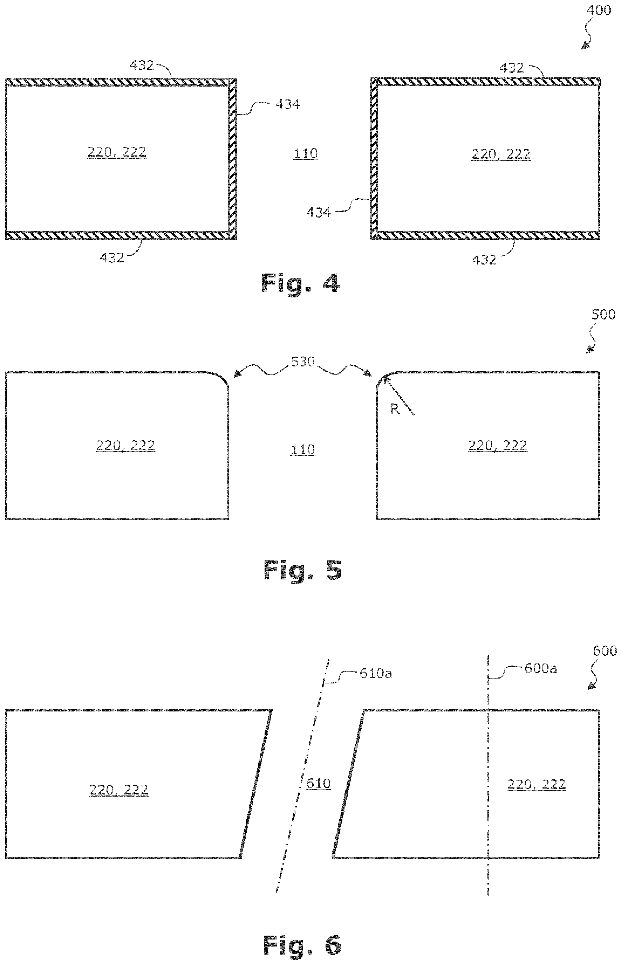

**Figur 4** zeigt in einer vergrößerten Querschnittsansicht ein Aufheizmittel 400 mit einer Öffnung 110 von einer Vielzahl von Öffnungen. Auf den beiden flächigen Oberflächen, d.h. der Unterseite und der Oberseite, des Aufheizmittels 400 ist jeweils eine Haftverstärkungsschicht 432 ausgebildet. An den Seitenwänden der Öffnung 110 ist eine Haftreduzierungsschicht 434 ausgebildet. Dadurch kann auf vorteilhafte Weise das Fließverhalten von aufgeschmolzenem Kunststoff durch die Öffnung 110 hindurch verbessert werden, so dass sich durch die Öffnung 110 hindurch eine besonders stabile Kunststoffverbindung ausbilden kann.

Ferner kann durch eine Haftkraftverstärkung an den beiden flächigen Oberflächen der bandartigen Struktur 102 auch eine mechanisch mehr oder weniger starke Verbindung zwischen dem Aufheizmittel 400 und dem jeweiligen Kunststoffobjekt hergestellt werden. Dies trägt zu einer weiteren Verbesserung der gesamten Schweißverbindung bei.

**Figur 5** zeigt in einer vergrößerten Querschnittsansicht ein Aufheizmittel 500, in dem eine Mehrzahl von Öffnungen 110 ausgebildet ist. Wie aus der exemplarisch dargestellten Öffnung 110 ersichtlich, erfolgt ein Übergang von einer flächigen Oberseite der bandartigen Struktur in die Öffnung 110 mit einer Verrundung 530. Diese trägt dazu bei, dass ein zunächst horizontal fließendes aufgeschmolzenes Kunststoffmaterial beim Eindringen in die Öffnung 110 nicht um eine Ecke herum fließen muss. Dadurch wird das Fließverhalten des aufgeschmolzen Kunststoffs in die Öffnung 110 hinein verbessert.

Bei bevorzugten Ausführungsbeispielen liegt ein Radius R der Verrundung in einem Bereich von $1\mu$m bis $100\mu$m. Es wird jedoch darauf hingewiesen, dass anstelle von einer im Querschnitt kreisförmigen Verrundung auch andere Arten von Abschrägungen, beispielsweise eine Versenkung, zu einem verbesserten Fließverhalten von aufgeschmolzenem Kunststoff in die Öffnung 110 hinein beitragen können.

**Figur 6** zeigt in einer vergrößerten Querschnittsansicht ein Aufheizmittel 600, in welchem eine schräge Öffnung 610 ausgebildet ist. Die "Schrägheit" der Öffnungen bezieht sich dabei auf einen Winkel, welcher zwischen einer Längsachse 610a der Öffnung 610 und einer Flächennormalen 600a der flächigen Oberflächen des Aufheizmittels 600 gebildet ist. Bei bevorzugten Ausführungsbeispielen liegt dieser Winkel in einem Bereich zwischen 10° und 60°, insbesondere in einem Bereich zwischen 20° und 50° und weiter insbesondere in einem Bereich zwischen 30° und 40°.

Es wird darauf hingewiesen, dass auch in diesem Ausführungsbeispiel das Aufheizmittel 400 eine Vielzahl von Öffnungen aufweist, von denen zumindest einige schräge Öffnungen sind. Aus Gründen der Übersichtlichkeit ist in Figur 6 nur eine schräge Öffnung 610 dargestellt.

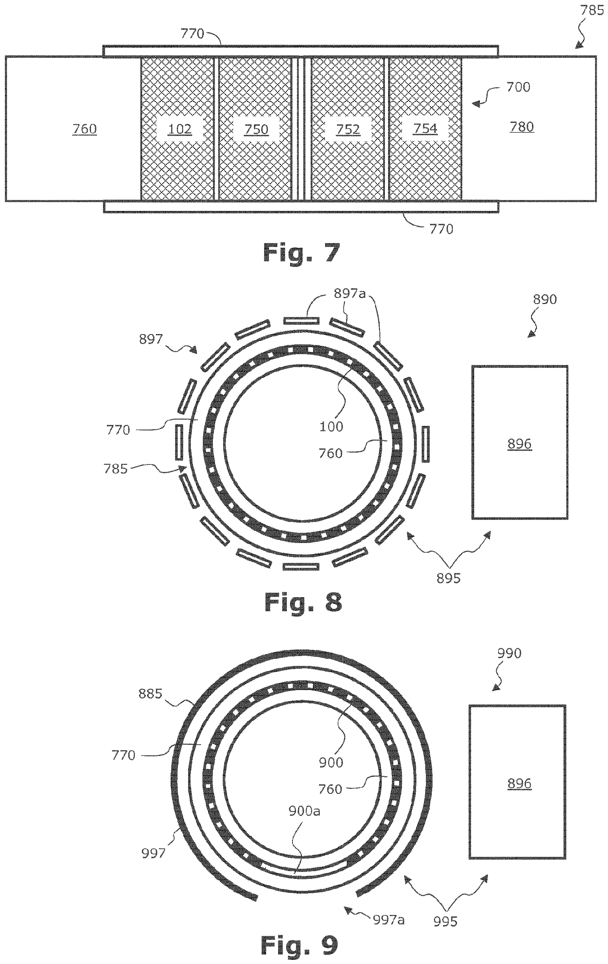

**Figur 7** zeigt in einer schematischen Draufsicht eine Anordnung 785 mit zwei jeweils als Rohr ausgebildeten inneren Kunststoffobjekten 760 und 780 und einem äußeren als eine Muffe ausgebildeten äußeren Kunststoffobjekt 770, welche allesamt mittels eines Aufheizmittels 700 miteinander verschweißt wurden. Das Aufheizmittel 700 umfasst gemäß dem hier dargestellten Ausführungsbeispiel insgesamt vier bandartige Strukturen, eine erste bandartigen Struktur 102 sowie drei weitere bandartigen Strukturen 750, 752 und 754, welche mit jeweils einer geringen Beabstandung parallel zueinander um das Kunststoffrohr 760 bzw. um das weitere Kunststoffrohr 780 umwickelt wurden. Das vier bandartige Strukturen umfassende Aufheizmittel 700 befindet sich, wie aus Figur 7 ersichtlich, zwischen der Muffe 770 und dem Kunststoffrohr 760 bzw. zwischen der Muffe 770 und dem weiteren Kunststoffrohr 780.

Die bandartigen Strukturen 102, 750, 752 und 754 können um die inneren Kunststoffobjekte 760 und 780 herum stofflich geschlossene (und lediglich elektrisch unterbrochene) Strukturen sein, welche ein Matrixmaterial und darin eingebettet elektrisch voneinander isolierte ferromagnetisch Partikel aufweisen. Alternativ können die bandartigen Strukturen 102, 750, 752 und 754 auch sowohl stofflich als auch elektrisch unterbrochene Strukturen sein, welche nachfolgend noch genauer beschrieben sind. Auch eine Kombination von stofflich geschlossenen Strukturen und stofflich unterbrochenen Strukturen kann für das Aufheizmittel 700 verwendet werden.

In diesem Zusammenhang wird darauf hingewiesen, dass die Figur 7 die Anordnung 785 grundsätzlich in einer Draufsicht zeigt. Aus Gründen der besseren Übersichtlichkeit ist lediglich die Muffe 770 in einer Querschnittsansicht dargestellt.

**Figur 8** zeigt ein System 890 aufweisend (a) die Anordnung 785, welche in einer Querschnittsansicht dargestellt ist, und (b) einen Induktionsgenerator 895, welcher dafür vorgesehen ist, das Aufheizmittel 100 (und ggf. auch die weiteren nicht dargestellten Aufheizmittel) induktiv zu erwärmen und so die Muffe 770 mit dem Kunststoffrohr 760 zu verschweißen. Der Induktionsgenerator 895 weist eine Erregungseinrichtung 896 sowie eine Spuleneinrichtung 897 mit einer Mehrzahl von Erregungsspulen 897a auf. Die Spuleneinrichtung 897 ist um die Muffe 770 herum angeordnet. Gemäß dem hier dargestellten Ausführungsbeispiel kann jede der einzelnen Erregungsspulen 897a individuell von der Erregungseinrichtung 896 bestromt werden.

Wie aus Figur 8 ersichtlich, ist gemäß dem hier dargestellten Ausführungsbeispiel das Aufheizmittel 100 vollständig um das Kunststoffrohr 760 gewickelt, so dass sich zwischen den beiden Enden des Aufheizmittels 760 ein nicht dargestellter Überlapp ergibt. Das Aufheizmittel kann jedoch deshalb nicht als eine (geschlossene) Sekundärspule angesehen werden, weil die in dem vorstehend beschriebenen Matrixmaterial eingebetteten ferromagnetischen Partikel elektrisch voneinander isoliert sind und so ein sog. Kurzschlussstrom um das gesamte innere Kunststoffrohr 760 herum nicht möglich ist.

Es wird darauf hingewiesen, dass die Spuleneinrichtung alternativ auch lediglich eine einzige Primärspule aufweisen kann, welche um die Muffe 770 herum verläuft. Eine solche um die Muffe 770 herum gelegte einzige Primärspule kann beispielsweise mit geeigneten elektrischen Steckverbindungen realisiert werden, welche nach einem hoffentlich erfolgreichen Schweißvorgang geöffnet werden können, so dass die einzige Primärspule von der Anordnung 785 entfernt werden kann.

Bei bevorzugten Ausführungsbeispielen besteht die Muffe 770 aus einem Material, welches bei einem virtuellen Schweißvorgang ohne einen Gegendruck durch das Kunststoffrohr 760 eine Schrumpfung entlang ihres Umfangs ausführen würde, welche mindestens 10%, bevorzugt mindestens 20% und weiter bevorzugt mindestens 30% beträgt. Dadurch wird in der Praxis, also mit einem Gegendruck durch das Kunststoffrohr 760, eine mechanische Spannung erzeugt, welche zu einer Verbesserung des Schweißergebnisses führt.

**Figur 9** zeigt ein System 990 aufweisend (a) einen Induktionsgenerator 995 mit einer offenen Spuleneinrichtung 997, (b) eine zu verschweißende Anordnung bestehend aus einem inneren Kunststoffrohr 760 und einer äußeren Muffe 770 und (b) ein sowohl stofflich als auch elektrisch unterbrochenes Aufheizmittel 900 zwischen dem inneren Rohr 760 und der äußeren Muffe 770.

Das Aufheizmittel 900 gemäß dem hier dargestellten Ausführungsbeispiel weist ein elektrisch leitfähiges und insbesondere ferromagnetisches Material auf. Somit können sich grundsätzlich nicht nur mikroskopische (Wirbel)Ströme sondern auch makroskopische Ströme in dem Aufheizmittel 900 ausbilden.

Aus Figur 9 ist ersichtlich, dass das Aufheizmittel 900 das Kunststoffrohr 760 lediglich teilweise umgibt und entlang des Umfangs des Kunststoffrohres 760 somit eine stofflich offene als auch eine elektrisch unterbrochene Struktur bildet. Der offene Bereich ist in Figur 9 mit dem Bezugszeichen 900a gekennzeichnet. Die Unterbrechung der offenen Spuleneinrichtung 997 ist mit dem Bezugszeichen 997a versehen. Wie bereits vorstehend beschrieben, kann bei der durch das Aufheizmittel 900 gegebenen offenen Schleife eine induktive Energieübertragung lediglich durch die Erzeugung von Wirbelströmen gewährleistet werden, welche eine mikroskopische Leitfähigkeit der bandartigen Struktur des Aufheizmittel 900 erfordern. Ein Kurzschlussstrom um das gesamte innere Kunststoffrohr 760 herum kann sich infolge des offenen Bereichs 900a nicht ausbilden.

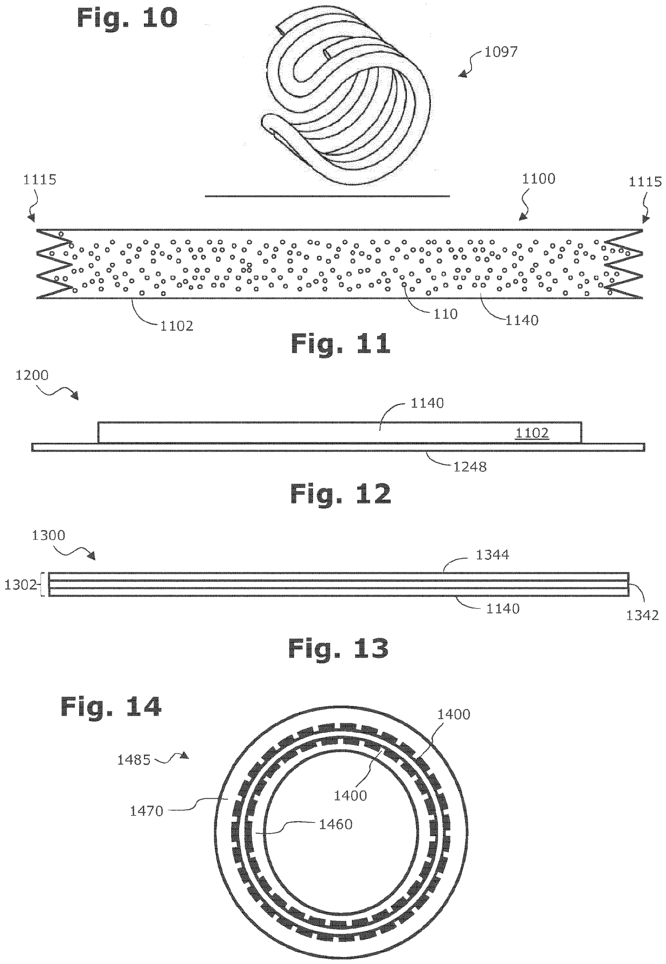

**Figur 10** zeigt eine offene Spuleneinrichtung 1097 mit verschlungenen Windungen. Die Spuleneinrichtung 1097 kann ohne ein Überstülpen auf leicht handhabbare Weise um die Anordnung bestehend aus zumindest zwei miteinander zu verschweißenden Objekten herum gelegt werden kann. Anschaulich ausgedrückt kann die Spuleneinrichtung 1097 wie eine flexible und längliche induktive Herdplatte um eine äußere Muffe bzw. ein äußeres Kunststoffobjekt herum gelegt werden.

**Figur 11** zeigt in einer Draufsicht ein Aufheizmittel 1100 mit gezackten Enden 1115. Das Aufheizmittel 1100 weist eine bandartige Struktur 1102 aus einem ferromagnetischen Material 1140 auf. Auch das Aufheizmittel 1100 weist eine Vielzahl von Öffnungen 110 auf.

Das Aufheizmittel 1100 gemäß dem hier dargestellten Ausführungsbeispiel wird als ein stofflich offenes bzw. unterbrochenes Aufheizmittel eingesetzt. Bei einer Anwendung befindet sich zwischen den beiden Enden 1115 die stoffliche Unterbrechung.

**Figur 12** zeigt in einer Querschnittsansicht ein Aufheizmittel 1200, welches eine bandartige Struktur 1102 aufweist, die sich auf einem bandartigen Träger 1248 befindet. Die bandartige Struktur 1102 weist ein durchgehendes ferromagnetisches Material 1140 auf. Der bandartige Träger 1248 besteht aus einem elektrisch nicht-leitfähigen Trägermaterial.

Der bandartigen Träger 1248 ist im Vergleich zu der bandartigen Struktur 1102 deutlich länger. Dies hat den Vorteil, dass das Aufheizmittel 1200 stofflich so lang sein kann, dass es für einen induktiven Schweißvorgang vollständig um ein erstes inneres Objekt herum gewickelt werden kann, wobei durch eine entsprechend kurze Ausbildung der elektrisch leitfähigen bandartigen Struktur 1102 sichergestellt wird, dass das Aufheizmittel 1200 keine geschlossene Sekundärspule mit den vorstehend beschriebenen Nachteilen der Entstehung von Kurzschlussströmen darstellt.

**Figur 13** zeigt in einer Seitenansicht ein Aufheizmittel 1300, eine bandartige Struktur 1302 aufweist, die aus mehrere (hier drei) Schichten aus jeweils einem unterschiedlichen ferromagnetischen Material aufgebaut ist. Eine erste Schicht weist ein erstes ferromagnetisches Material 1140 mit einer ersten Curie-Temperatur auf. Eine zweite Schicht weist ein zweites ferromagnetisches Material 1342 mit einer zweiten Curie-Temperatur auf. Die dritte Schicht weist ein drittes ferromagnetisches Material 1344 mit einer dritten Curie-Temperatur auf. Gemäß dem hier dargestellten Ausführungsbeispiel sind die drei Curie-Temperaturen unterschiedlich. Damit kann sich eine mittlere Curie-Temperatur des Aufheizmittels 1300 ergeben, welche durch eine geeignete Wahl der drei ferromagnetischen Materialien auf die jeweilige spezifische Schweißanwendung angepasst werden kann.

In anderen Ausführungsformen stellt sich keine gemeinsame mittlere Curie-Temperatur ein, so dass ein induktiver Energieeintrag auf das Aufheizmittel 1300 nach einem Erreichen der niedrigeren Curie-Temperatur reduziert aber nicht vollständig unterbunden wird. In der Folge wird sich bei gleicher induktiver Erregung eine langsamere Temperaturerhöhung ergeben, wobei mit dem Erreichen der jeweils nächst höheren Curie-Temperatur eine induktive Kopplung zwischen einer Erregerspule und dem Aufheizmittel 1300 reduziert wird.

Bei bevorzugten Ausführungsformen liegt eine Dicke D des Aufheizmittels 1300 in einem Bereich zwischen 0,1mm und 5mm, und insbesondere im Bereich zwischen 0,5mm und 3mm. Diese Dimensionen gelten auch für eine bandartige Struktur, welches lediglich aus einer Schicht von einem ferromagnetischen Material besteht.

Es wird darauf hingewiesen, dass geschichtete Aufheizmittel auch 2, 4 oder mehr Schichten haben können.

Es wird ferner darauf hingewiesen, dass das Aufheizmittel 1300 an seinen flächigen Seiten, d.h. in Figur 13 an der oberen Oberfläche und/oder an der unteren Oberfläche, eine Oberflächenrauigkeit aufweisen kann. Eine solche Oberflächengenauigkeit basiert auf Erhöhungen und Vertiefungen, welche zueinander einen mittleren Höhenunterschied aufweisen. Bei bevorzugten Ausführungsformen ist dieser mittlere Höhenunterschied größer als 10μm. Eine Oberflächenrauigkeit kann auch bei den anderen in diesem Dokument beschriebenen Aufheizmitteln zu verbesserten Schweißergebnissen führen.

**Figur 14** zeigt eine zu verschweißende Anordnung 1485 aufweisend ein inneres Kunststoffrohr 1460 und eine äußere Muffe 1470, in welchen jeweils ein stofflich geschlossenes aber elektrisch unterbrochenes Aufheizmittel 1400 integriert ist. Dadurch kann die Handhabung bzw. die Durchführung eines induktiven Schweißvorgangs vereinfacht werden, weil lediglich die zu verschweißenden Objekte und nicht zusätzlich noch ein (externes) Aufheizmittel von einer Bedienperson gehandhabt werden müssen.

Es sollte angemerkt werden, dass der Begriff "aufweisen" nicht andere Elemente ausschließt und dass das "ein" nicht eine Mehrzahl ausschließt. Auch können Elemente, die in Zusammenhang mit unterschiedlichen Ausführungsbeispielen beschrieben sind, kombiniert werden. Es sollte auch angemerkt werden, dass Bezugszeichen in den Ansprüchen nicht als den Schutzbereich der Ansprüche beschränkend ausgelegt werden sollen.

BEZUGSZEICHEN:

| | |
|---|---|
| 100 | Aufheizmittel |
| 102 | bandartige Struktur |
| 110 | Öffnungen |
| L | Länge |
| B | Breite |

| | |
|---|---|
| 200 | Aufheizmittel |
| 220 | Partikel / Ferrite |
| 222 | Matrixmaterial |

| | |
|---|---|
| 300 | Aufheizmittel |
| 324 | Trägerelemente / Trägerfolien |
| D | Dicke |

| | |
|---|---|
| 400 | Aufheizmittel |
| 432 | Haftkraftveränderungsschicht / Haftkraftverstärkungsschicht |
| 434 | Haftkraftveränderungsschicht / Haftkraftreduzierungsschicht |

| | |
|---|---|
| 500 | Aufheizmittel |
| 530 | Verrundung |
| R | Verrundungsradius |

| | |
|---|---|
| 600 | Aufheizmittel |
| 600a | Flächennormale |
| 610 | schräge Öffnung |
| 610a | Längsachse |

| | |
|---|---|
| 700 | Aufheizmittel |
| 750 | weitere bandartige Struktur |
| 752 | weitere bandartige Struktur |
| 754 | weitere bandartige Struktur |
| 760 | erstes inneres Objekt / Kunststoffrohr |
| 770 | zweites äußeres Objekt / Muffe |
| 780 | drittes inneres Objekt / weiteres Kunststoffrohr |
| 785 | Anordnung |

| | |
|---|---|
| 890 | System |
| 895 | Generator / Induktionsgenerator |
| 896 | Erregungseinrichtung |
| 897 | Spuleneinrichtung |
| 897a | Erregungsspule |

| 900 | Aufheizmittel |
| 900a | Unterbrechung Aufheizmittel / offener Bereich |
| 990 | System |
| 995 | Generator / Induktionsgenerator |
| 997 | Spuleneinrichtung |
| 997a | Unterbrechung |
| | |
| 1097 | Spuleneinrichtung mit verschlungenen Windungen |
| | |
| 1100 | Aufheizmittel |
| 1102 | bandartige Struktur |
| 1115 | gezackte Enden |
| 1140 | ferromagnetisches Material |
| | |
| 1200 | Aufheizmittel |
| 1248 | bandartiger Träger |
| | |
| 1300 | Aufheizmittel |
| 1302 | bandartige Struktur |
| 1342 | ferromagnetisches Material |
| 1344 | ferromagnetisches Material |
| | |
| 1400 | Aufheizmittel (integriert) |
| 1460 | erstes inneres Objekt / Kunststoffrohr |
| 1470 | zweites äußeres Objekt / Muffe |
| 1485 | Anordnung |

**Patentansprüche**

1. Aufheizmittel (100-1400) zum thermischen Verbinden zweier jeweils ein Kunststoffmaterial aufweisenden Objekte (760, 770), wobei beim Verbinden (i) ein erstes inneres Objekt (760) zumindest teilweise von einem zweiten äußeren Objekt (770) umgeben ist und (ii) das Aufheizmittel (100-1400) entlang eines vollumfänglichen Umfangsverlaufs um das erste innere Objekt (760) herum das erste innere Objekt (760) zumindest teilweise umgibt und sich zwischen dem ersten inneren Objekt (760) und dem zweiten äußeren Objekt (770) befindet, das Aufheizmittel (100-1400) aufweisend

   eine bandartige Struktur (1102), welche entlang des Umfangsverlaufs stofflich unterbrochen ist; wobei

      die bandartige Struktur (1102) ein Aufheizhilfsmaterial (220, 1140) aufweist, welches induktiv erhitzbar ist, wobei das Aufheizhilfsmaterial (220, 1140) entlang des Umfangsverlaufs räumlich derart verteilt oder angeordnet ist, dass entlang des vollumfänglichen Umfangsverlaufs um das erste innere Objekt (760) herum eine elektrische Leitfähigkeit an zumindest einer Stelle unterbrochen ist, und wobei in der bandartigen Struktur (102, 1102, 1302) eine Mehrzahl von Öffnungen (110, 610) ausgebildet ist, wobei die Öffnungen (110, 610) derart dimensioniert sind, dass aufgeschmolzenes Kunststoffmaterial des ersten inneren Objekts (760) und/oder des zweiten äußeren Objekts (770) eindringen und sich mit aufgeschmolzenem Kunststoffmaterial des jeweils anderen Objekts (770, 760) verbinden kann und/oder wobei die Öffnungen mit einem Kunststoffmaterial gefüllt sind, welches sich mit aufgeschmolzenem Kunststoffmaterial des ersten inneren Objekts (760) und/oder des zweiten äußeren Objekts (770) verbinden kann; **gekennzeichnet durch**

      einen bandartigen Träger (1248), an welchem die bandartige Struktur (1102) angebracht ist, wobei

         entlang einer Längsrichtung der bandartigen Struktur (1102) der bandartige Träger (1248) eine größere Abmessung aufweist als die bandartige Struktur (1102) und wobei der bandartige Träger (1248) aus einem elektrisch nicht-leitfähigen Trägermaterial besteht.

2. Aufheizmittel (100, 200) gemäß dem vorangehenden Anspruch, wobei das Aufheizhilfsmaterial zumindest eines der folgenden Materialien aufweist:

(A) ein elektrisch leitfähiges Material;
(B) ein magnetisches Material, insbesondere ein ferromagnetisches und/oder ein ferrimagnetisches Material;
(C) ein ferromagnetisches oder ferrimagnetisches Material (1140), welches eine Curie-Temperatur hat, die geringer ist als 460°C, insbesondere geringer als 400°C, weiter insbesondere geringer als 300°C und noch weiter insbesondere geringer als 250°C.

3. Aufheizmittel (100, 200) gemäß einem der vorangehenden Ansprüche, wobei
die bandartige Struktur ein elektrisch nicht-leitfähiges Matrixmaterial (222) und eine Vielzahl von magnetischen, insbesondere ferromagnetischen und/oder ferrimagnetischen und/oder elektrisch leitfähigen Partikeln (220) aufweist, welche in dem Matrixmaterial (222) eingebettet sind und welche elektrisch voneinander isoliert sind.

4. Aufheizmittel (100, 200) gemäß dem vorangehenden Anspruch, wobei das Aufheizmittel (100, 200) zumindest eine der folgenden Eigenschaften aufweist:

(A) die Partikel weisen Ferrite (220) auf;
(B) das Matrixmaterial (222) hat einen spezifischen elektrischen Widerstand von wenigstens 1 Ohm/mm2, insbesondere wenigstens 100 Ohm/mm2 und weiter insbesondere wenigstens 10000 Ohm/mm2;
(C) das Matrixmaterial (222) weist zumindest eines der folgenden Materialien aufweist:

(a) Thermoplastische Polymere, insbesondere Polyolefine wie PE, PP, PB, CPE, COC, EVA;
(b) Polystyrol und deren Co-Polymere, insbesondere ABS SAN;
(c) Elastomere, insbesondere TPE, EPDM, SBR, NBR, BR;
(d) Polyester, insbesondere PET, PBT, PEN, PLA, PVA;
(e) Halogen-Polymere, insbesondere PVC, PVF, PVDC, PVDF, PTFE;
(f) Polyamide, insbesondere PA4.2, 4.6, 6.6, 6.10, 4.10, PA6, 11, 12, sowie jeweils Co-Polymere und/oder Gemische davon.

5. Aufheizmittel (300) gemäß einem der vorangehenden Ansprüche, wobei die bandartige Struktur (102) ferner zwei flächige Trägerelemente (324) aufweist, wobei das Aufheizhilfsmaterial (220, 1140) zwischen den beiden Trägerelementen (324) eingebettet ist.

6. Aufheizmittel (1100) gemäß einem der vorangehenden Ansprüche, wobei zumindest ein Ende (1115) der bandartigen Struktur (1102) eine gewellte, gezackte und/oder mäanderförmige Kontur aufweist.

7. Aufheizmittel (1300) gemäß einem der vorangehenden Ansprüche, wobei die bandartige Struktur (1300) einen schichtweisen Aufbau von unterschiedlichen Materialien (1140, 1242, 1244) aufweist, welche insbesondere eine unterschiedliche Härte, eine unterschiedliche Elastizität und/oder eine unterschiedliche Duktilität aufweisen.

8. Aufheizmittel (400) gemäß einem der vorangehenden Ansprüche, ferner aufweisend
eine Haftkraftveränderungsschicht (432, 434), welche an zumindest einer Oberfläche der bandartigen Struktur angebracht oder ausgebildet ist.

9. Aufheizmittel gemäß dem vorangehenden Anspruch, wobei die Haftkraftveränderungsschicht

an der Oberfläche der bandartigen Struktur eine Haftkraftverstärkungsschicht (432) aufweist und/oder, sofern rückbezogen auf Anspruch 6, an den Seitenwänden der Öffnungen eine Haftkraftreduzierungsschicht (434) aufweist.

10. Aufheizmittel (500) gemäß einem der vorangehenden Ansprüche, wobei ein Übergang zwischen der flächigen Oberfläche der bandartigen Struktur und einer Öffnung (110) verrundet ist.

11. Aufheizmittel (600) gemäß einem der vorangehenden Ansprüche, wobei zumindest einige der Öffnungen (110) jeweils eine Längsachse (610a) aufweisen, welche mit einer Flächennormale (600a) der Oberfläche der bandartigen Struktur einen Winkel von ungleich Null bilden.

12. Aufheizmittel gemäß einem der vorangehenden Ansprüche, wobei die bandartige Struktur eine Oberfläche mit Erhöhungen und Vertiefungen aufweist, wobei ein mittlerer Höhenunterschied zwischen den Erhöhungen und den Vertiefungen im Bereich zwischen 0,01 mm und 2 mm, insbesondere im Bereich zwischen 0,1 mm und 1,5 mm und weiter insbesondere im Bereich zwischen 0,5 mm und 1,2 mm liegt

**13.** Aufheizmittel (700) gemäß einem der vorangehenden Ansprüche, ferner aufweisend
zumindest eine weitere bandartige Struktur (750, 752, 754), welche neben der bandartigen Struktur (102) angeordnet ist, wobei die weitere bandartige Struktur (750, 752, 754) zumindest annähernd parallel zu der bandartigen Struktur (102) orientiert ist.

**14.** Verfahren zum thermischen Verbinden zweier jeweils ein Kunststoffmaterial aufweisenden Objekte (760, 770), das Verfahren aufweisend

räumliches Anordnen eines ersten inneren Objekts (760), eines zweiten äußeren Objekts (770) und eines Aufheizmittels (100, 700, 900) gemäß einem der vorangehenden Ansprüche, so dass (i) das erste innere Objekt (760) zumindest teilweise von dem zweiten äußeren Objekt (770) umgeben ist und (ii) das Aufheizmittel (100, 700, 900) entlang eines vollumfänglichen Umfangsverlaufs um das erste innere Objekt (760) herum das erste innere Objekt (760) zumindest teilweise umgibt und sich zwischen dem ersten inneren Objekt (760) und dem zweiten äußeren Objekt (770) befindet;
induktives Erhitzen des Aufheizmittels (100, 700, 900), so dass sich aufgeschmolzenes Kunststoffmaterial des ersten inneren Objekts (760) und/oder des zweiten äußeren Objekts (770) mit aufgeschmolzenem Kunststoffmaterial des jeweils anderen Objekts (770, 760) direkt oder indirekt verbindet; und
Abkühlen des Aufheizmittels (100, 700, 900); wobei insbesondere das induktive Erhitzen aufweist
Erregen einer Spuleneinrichtung (897, 997) eines Induktionsgenerators (895, 995) zum Erzeugen von elektromagnetischen Wellen, welche mit dem Aufheizmittel (100, 700, 900) induktiv koppeln, wobei die elektromagnetischen Wellen eine Frequenz aufweisen, welche größer ist als 8 kHz, insbesondere größer als 15 kHz und weiter insbesondere größer ist als 100 kHz.

**Claims**

**1.** Heating means (100-1400) for thermally bonding two objects (760, 770) each comprising a plastic material, wherein upon bonding (i) a first inner object (760) is at least partially surrounded by a second outer object (770) and (ii) the heating means (100-1400) at least partially surrounds the first inner object (760) along a full circumferential path around the first inner object (760) and is located between the first inner object (760) and the second outer object (770), the heating means (100-1400) comprising

a band-like structure (1102) which is materially interrupted along the circumferential course; wherein the band-like structure (1102) comprises a heating aid material (220, 1140) which is inductively heatable, wherein the heating aid material (220, 1140) is spatially distributed or arranged along the circumferential path such that along the full circumferential path around the first inner object (760) electrical conductivity is interrupted in at least one location, and wherein
a plurality of openings (110, 610) are formed in the band-like structure (102, 1102, 1302), wherein the openings (110, 610) are dimensioned such that molten plastic material of the first inner object (760) and/or the second outer object (770) can penetrate and bond with molten plastic material of the respective other object (770, 760) and/or wherein the openings are filled with a plastic material which can bond with molten plastic material of the first inner object (760) and/or of the second outer object (770);
**characterized by** a band-like support (1248) to which the band-like structure (1102) is attached, wherein along a longitudinal direction of the band-like structure (1102), the band-like support (1248) has a larger dimension than the band-like structure (1102), and wherein
the band-like support (1248) is made of an electrically non-conductive support material.

**2.** Heating means (100, 200) according to the preceding claim, wherein the heating aid material comprises at least one of the following materials:

(A) an electrically conductive material;
(B) a magnetic material, in particular a ferromagnetic and/or a ferrimagnetic material;
(C) a ferromagnetic or ferrimagnetic material (1140) having a Curie temperature lower than 460°C, in particular lower than 400°C, further in particular lower than 300°C, and still further in particular lower than 250°C.

**3.** Heating means (100, 200) according to any one of the preceding claims, wherein
the band-like structure comprises an electrically non-conductive matrix material (222) and a plurality of magnetic, in particular ferromagnetic and/or ferrimagnetic and/or electrically conductive particles (220) which are embedded in the matrix material (222) and which are electrically insulated from one another.

**4.** Heating means (100, 200) according to the preceding claim, wherein the heating means (100, 200) has at least one of the following properties:

(A) the particles comprise ferrites (220);
(B) the matrix material (222) has a specific electrical resistance of at least 1 ohm/mm2, in particular at least 100 ohm/mm2 and further in particular at least 10000 ohm/mm2;
(C) the matrix material (222) comprises at least one of the following materials:

(a) thermoplastic polymers, in particular polyolefins such as PE, PP, PB, CPE, COC, EVA;
(b) Polystyrene and their co-polymers, in particular ABS SAN;
(c) elastomers, in particular TPE, EPDM, SBR, NBR, BR;
(d) polyesters, in particular PET, PBT, PEN, PLA, PVA;
(e) Halogen polymers, in particular PVC, PVF, PVDC, PVDF, PTFE;
(f) polyamides, in particular PA4.2, 4.6, 6.6, 6.10, 4.10, PA6, 11, 12, and in each case co-polymers and/or mixtures thereof.

**5.** Heating means (300) according to any one of the preceding claims, wherein
the band-like structure (102) further comprises two planar support elements (324), wherein the heating aid material (220, 1140) is embedded between the two support elements (324).

**6.** Heating means (1100) according to any one of the preceding claims, wherein
at least one end (1115) of the band-like structure (1102) has a corrugated, serrated and/or meandering contour.

**7.** Heating means (1300) according to any one of the preceding claims, wherein
the band-like structure (1300) has a layered structure of different materials (1140, 1242, 1244), which in particular have a different hardness, a different elasticity and/or a different ductility.

**8.** Heating means (400) according to any one of the preceding claims, further comprising
an adhesive force modifying layer (432, 434) attached to or formed on at least one surface of the band-like structure.

**9.** Heating means according to the preceding claim, wherein

the adhesive force modifying layer
comprises an adhesion force enhancing layer (432) on the surface of the band-like structure and/or,
if referenced back to claim 6, having an adhesive force reducing layer (434) on the sidewalls of the openings.

**10.** Heating means (500) according to any one of the preceding claims, wherein
a transition between the planar surface of the band-like structure and an opening (110) is rounded.

**11.** Heating means (600) according to any one of the preceding claims, wherein
at least some of the openings (110) each have a longitudinal axis (610a) forming a non-zero angle with a surface normal (600a) of the surface of the band-like structure.

**12.** Heating means according to one of the preceding claims, wherein the band-like structure has a surface with elevations and depressions, wherein an average height difference between the elevations and the depressions is in the range between 0.01 mm and 2 mm, in particular in the range between 0.1 mm and 1.5 mm, and further in particular in the range between 0.5 mm and 1.2 mm.

**13.** Heating means (700) according to any one of the preceding claims, further comprising
at least one further band-like structure (750, 752, 754) arranged adjacent to the band-like structure (102), wherein the further band-like structure (750, 752, 754) is oriented at least approximately parallel to the band-like structure (102).

**14.** Method for thermally joining two objects (760, 770) each comprising a plastic material, the method comprising

spatially arranging a first inner object (760), a second outer object (770), and a heating means (100, 700, 900) according to any one of the preceding claims such that (i) the first inner object (760) is at least partially surrounded by the second outer object (770) and (ii) the heating means (100, 700, 900) along a full circumferential path around the first inner object (760) at least partially surrounds the first inner object (760) and is located between the first inner object (760) and the second outer object (770);

inductively heating the heating means (100, 700, 900) so that melted plastic material of the first inner object (760) and/or the second outer object (770) bonds directly or indirectly with melted plastic material of the respective other object (770, 760); and

cooling the heating means (100, 700, 900);

wherein in particular the inductive heating comprises
energizing coil means (897, 997) of an induction generator (895, 995) for generating electromagnetic waves which inductively couple with said heating means (100, 700, 900), said electromagnetic waves having a frequency which is greater than 8 kHz, in particular greater than 15 kHz, and further in particular greater than 100 kHz.

## Revendications

**1.** Moyen de chauffage (100-1400) pour coller thermiquement deux objets (760, 770) comprenant chacun une matière plastique, dans lequel lors du collage (i) un premier objet intérieur (760) est au moins partiellement entouré par un second objet extérieur (770) et (ii) le moyen de chauffage (100-1400) entoure au moins partiellement le premier objet intérieur (760) le long d'une trajectoire circonférentielle complète autour du premier objet intérieur (760) et est situé entre le premier objet intérieur (760) et le second objet extérieur (770), le moyen de chauffage (100-1400) comprenant

une structure en forme de bande (1102) qui est matériellement interrompue le long de la trajectoire circonférentielle ; dans laquelle

la structure en forme de bande (1102) comprend un matériau d'aide au chauffage (220, 1140) qui est chauffé par induction, dans lequel le matériau d'aide au chauffage (220, 1140) est spatialement réparti ou disposé le long de la trajectoire circonférentielle de sorte que le long de la trajectoire circonférentielle complète autour du premier objet intérieur (760), la conductivité électrique est interrompue à au moins un endroit, et dans lequel plusieurs ouvertures (110, 610) sont formées dans la structure en forme de bande (102, 1102, 1302), dans laquelle les ouvertures (110, 610) sont dimensionnées de manière à ce que la matière plastique fondue du premier objet intérieur (760) et/ou du second objet extérieur (770) puisse pénétrer et se lier à la matière plastique fondue de l'autre objet respectif (770, 760) et/ou dans laquelle les ouvertures sont remplies d'une matière plastique qui peut se lier à la matière plastique fondue du premier objet intérieur (760) et/ou du second objet extérieur (770) ;

**caractérisé par** un support en forme de bande (1248) auquel la structure en forme de bande (1102) est attachée, dans lequel le long d'une direction longitudinale de la structure en forme de bande (1102), le support en forme de bande (1248) a une dimension plus grande que la structure en forme de bande (1102), et dans lequel le support en forme de bande (1248) est constitué d'un matériau de support électriquement non conducteur.

**2.** Moyen de chauffage (100, 200) selon la revendication précédente, dans lequel le matériau d'aide au chauffage comprend au moins l'un des matériaux suivants :

(A) un matériau électriquement conducteur ;
(B) un matériau magnétique, en particulier un matériau ferromagnétique et/ou ferrimagnétique ;
(C) un matériau ferromagnétique ou ferrimagnétique (1140) ayant une température de Curie inférieure à 460°C, en particulier inférieure à 400°C, en particulier inférieure à 300°C, et en particulier inférieure à 250°C.

**3.** Moyen de chauffage (100, 200) selon l'une quelconque des revendications précédentes, dans lequel la structure en forme de bande comprend un matériau de matrice électriquement non conducteur (222) et une pluralité de particules magnétiques, en particulier ferromagnétiques et/ou ferrimagnétiques et/ou électriquement conductrices (220) qui sont noyées dans le matériau de matrice (222) et qui sont électriquement isolées les unes des autres.

**4.** Moyen de chauffage (100, 200) selon la revendication précédente, dans lequel le moyen de chauffage (100, 200) présente au moins l'une des propriétés suivantes :

(A) les particules comprennent des ferrites (220) ;
(B) le matériau de la matrice (222) a une résistance électrique spécifique d'au moins 1 ohm/mm2, en particulier d'au moins 100 ohm/mm2 et en particulier d'au moins 10000 ohm/mm2 ;
(C) le matériau de la matrice (222) comprend au moins l'un des matériaux suivants :

(a) polymères thermoplastiques, en particulier polyoléfines telles que PE, PP, PB, CPE, COC, EVA;
(b) polystyrène et ses copolymères, en particulier ABS SAN ;
(c) élastomères, en particulier TPE, l'EPDM, SBR, NBR, BR ;
(d) polyesters, en particulier PET, PBT, PEN, PLA, PVA ;
(e) polymères halogénés, en particulier PVC, PVF, PVDC, PVDF, PTFE ;
(f) les polyamides, en particulier PA4.2, 4.6, 6.6, 6.10, 4.10, PA6, 11, 12, et dans chaque cas les copolymères et/ou les mélanges de ceux-ci.

**5.** Moyen de chauffage (300) selon l'une quelconque des revendications précédentes, dans lequel la structure en forme de bande (102) comprend en outre deux éléments de support planaires (324), dans lesquels le matériau d'aide au chauffage (220, 1140) est noyé entre les deux éléments de support (324).

**6.** Moyen de chauffage (1100) selon l'une quelconque des revendications précédentes, dans lequel au moins une extrémité (1115) de la structure en forme de bande (1102) présente un contour ondulé, dentelé et/ou sinueux.

**7.** Moyen de chauffage (1300) selon l'une quelconque des revendications précédentes, dans lequel la structure en forme de bande (1300) a une structure en couches de différents matériaux (1140, 1242, 1244), qui ont en particulier une dureté différente, une élasticité différente et/ou une ductilité différente.

**8.** Moyen de chauffage (400) selon l'une quelconque des revendications précédentes, comprenant en outre une couche de modification de la force adhésive (432, 434) fixée ou formée sur au moins une surface de la structure en forme de bande.

**9.** Moyen de chauffage selon la revendication précédente, dans lequel

la couche de modification de la force adhésive
comprend une couche d'amélioration de la force adhésive (432) sur la surface de la structure en forme de bande et/ou,
si l'on se réfère à la revendication 6, une couche réduisant la force adhésive (434) sur les parois latérales des ouvertures.

**10.** Moyen de chauffage (500) selon l'une quelconque des revendications précédentes, dans lequel une transition entre la surface planaire de la structure en forme de bande et une ouverture (110) est arrondie.

**11.** Moyen de chauffage (600) selon l'une quelconque des revendications précédentes, dans lequel au moins certaines des ouvertures (110) ont chacune un axe longitudinal (610a) formant un angle non nul avec une normale de surface (600a) de la surface de la structure en forme de bande.

**12.** Moyen de chauffage selon l'une des revendications précédentes, dans lequel la structure en forme de bande a une surface avec des élévations et des dépressions, dans lequel une différence de hauteur moyenne entre les élévations et les dépressions est comprise entre 0,01 mm et 2 mm, en particulier entre 0,1 mm et 1,5 mm, et en particulier entre 0,5 mm et 1,2 mm.

**13.** Moyen de chauffage (700) selon l'une quelconque des revendications précédentes, comprenant en outre au moins une autre structure en forme de bande (750, 752, 754) disposée à côté de la structure en forme de bande (102), dans laquelle l'autre structure en forme de bande (750, 752, 754) est orientée au moins approximativement parallèlement à la structure en forme de bande (102).

**14.** Procédé de collage thermique de deux objets (760, 770) comprenant chacun une matière plastique, comprenant les étapes de

disposer dans l'espace un premier objet intérieur (760), un second objet extérieur (770) et un moyen de chauffage (100, 700, 900) selon l'une quelconque des revendications précédentes de telle sorte que (i) le premier objet intérieur (760) soit au moins partiellement entouré par le second objet extérieur (770) et (ii) le moyen de chauffage (100, 700, 900) sur une trajectoire circonférentielle complète autour du premier objet intérieur (760) entoure au moins partiellement le premier objet intérieur (760) et est situé entre le premier objet intérieur (760) et le deuxième objet extérieur (770) ;

chauffer par induction le moyen de chauffage (100, 700, 900) de sorte que la matière plastique fondue du premier objet intérieur (760) et/ou du deuxième objet extérieur (770) se lie directement ou indirectement à la matière plastique fondue de l'autre objet respectif (770, 760) ; et

refroidir le moyen de chauffage (100, 700, 900) ; dans lequel le chauffage par induction comprend en particulier alimenter des moyens de bobine (897, 997) d'un générateur d'induction (895, 995) pour générer des ondes électromagnétiques qui se couplent par induction avec ledit moyen de chauffage (100, 700, 900), lesdites ondes électromagnétiques ayant une fréquence supérieure à 8 kHz, en particulier supérieure à 15 kHz, et en outre en particulier supérieure à 100 kHz.

100

L

B

110    102

**Fig. 1a**

L

B

110    102

**Fig. 1b**

200

D

222    110    102
220

**Fig. 2**

300

324

102    220, 222

324

**Fig. 3**

400

432

434

220, 222

110

434

220, 222

432

432

**Fig. 4**

500

530

220, 222

110

R

220, 222

**Fig. 5**

600

610a

600a

220, 222

610

220, 222

**Fig. 6**

**Fig. 7**

**Fig. 8**

**Fig. 9**

**Fig. 10**

1097

1115             1100          1115

1102        110     1140

**Fig. 11**

1200

1140

1102

1248

**Fig. 12**

1300

1344

1302

1140

1342

**Fig. 13**

**Fig. 14**

1400

1485

1400

1470

1460

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2886285 A1
- DE 102013021667 A1
- EP 2452805 A1
- AT 508119 A4
- US 2739829 A
- JP H09188859 A
- JP H10688 A

- JP H09323359 A
- FR 2748415 A1
- US 5756973 A
- JP H11304080 A
- JP S63308080 A
- JP H1047580 A
- DE 102006059337 A1